(19) Europäisches Patentamt
European Patent Office
Office européen des brevets

(11) EP 3 891 229 B1

(12) FASCICULE DE BREVET EUROPEEN

(45) Date de publication et mention de la délivrance du brevet:
**27.03.2024 Bulletin 2024/13**

(21) Numéro de dépôt: **19839361.3**

(22) Date de dépôt: **04.12.2019**

(51) Classification Internationale des Brevets (IPC):
***C09D 5/14*** *(2006.01)*

(52) Classification Coopérative des Brevets (CPC):
**C09D 5/14**

(86) Numéro de dépôt international:
**PCT/FR2019/052921**

(87) Numéro de publication internationale:
**WO 2020/115434 (11.06.2020 Gazette 2020/24)**

(54) **PROCÉDÉ DE PRÉPARATION D'UNE SURFACE À ACTIVITÉ BACTÉRIOSTATIQUE ET SURFACE AINSI PRÉPARÉE**

VERFAHREN ZUR HERSTELLUNG EINER BAKTERIOSTATISCHEN OBERFLÄCHE UND SO HERGESTELLTE OBERFLÄCHE

PROCESS FOR PREPARING A SURFACE WITH BACTERIOSTATIC ACTIVITY AND SURFACE THUS PREPARED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.12.2018 FR 1872310**

(43) Date de publication de la demande:
**13.10.2021 Bulletin 2021/41**

(73) Titulaires:
- **Commissariat à l'énergie atomique et aux énergies alternatives 75015 Paris (FR)**
- **Centre National de la Recherche Scientifique 75794 Paris Cedex 16 (FR)**
- **Institut national de recherche pour l'agriculture, l'alimentation et l'environnement 75338 Paris Cedex 07 (FR)**

(72) Inventeurs:
- **CARROT, Géraldine 91191 GIF Cedex (FR)**
- **BELLON-FONTAINE, Marie-Noëlle 75338 PARIS CEDEX 7 (FR)**
- **BERNARDI, Sarah 56130 Saint-Dolay (FR)**

(74) Mandataire: **Brevalex**
**56, Boulevard de l'Embouchure**
**B.P. 27519**
**31075 Toulouse Cedex 2 (FR)**

(56) Documents cités:
- **TAL SHALEV ET AL: "Non-leaching antimicrobial surfaces through polydopamine bio-inspired coating of quaternary ammonium salts or an ultrashort antimicrobial lipopeptide", JOURNAL OF MATERIALS CHEMISTRY, vol. 22, no. 5, 1 janvier 2012 (2012-01-01), pages 2026-2032, XP055618084, GB ISSN: 0959-9428, DOI: 10.1039/C1JM13994K**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 891 229 B1

## Description

### DOMAINE TECHNIQUE

La présente invention appartient au domaine technique des surfaces antibactériennes et, plus particulièrement, des surfaces sur lesquelles adhèrent et sont greffés, de façon covalente, des polymères à activité bactériostatique ou bactéricide du type polyionène.

Plus particulièrement, la présente invention concerne un procédé pour conférer des propriétés bactériostatiques ou bactéricides à la surface d'un objet consistant à déposer et/ou à greffer, de façon covalente et séquentielle, un revêtement de type polydopamine, fonctionnalisé de façon à participer à une polyaddition et un revêtement de type polyionène. La présente invention concerne également la surface présentant des propriétés bactériostatiques ou bactéricides ainsi préparée et ses utilisations.

### ÉTAT DE LA TECHNIQUE ANTÉRIEURE

Aussi bien pour des préoccupations économiques qu'environnementales, il existe une demande croissante, ces dernières années, pour des surfaces ou des revêtements antibactériens qui permettent une action durable de décontamination dans le domaine des emballages de produits alimentaires comme des produits alimentaires frais, de l'environnement ou du milieu médico-hospitalier.

Les anciennes générations de revêtements antimicrobiens à élution chimique n'ont qu'un effet antimicrobien à court terme et sont à l'origine de toxicité et/ou de résistance microbienne. L'utilisation généralisée de solutions est également coûteuse et a un impact négatif important sur l'environnement (effluents). Un revêtement actif par contact contenant des agents antimicrobiens immobilisés est moins susceptible d'entraîner le développement d'une résistance des bactéries. En effet, cette classe de revêtements perturbe les membranes des bactéries sans cibler leur activité métabolique, ce qui est associé à l'apparition d'une résistance. Des polymères antimicrobiens, en particulier cationiques, ont été appliqués en tant que revêtements pro-adhésifs et ont été rapportés pour perturber efficacement la membrane cytoplasmique des bactéries indésirables (flore d'altération et pathogène) **[1].** Cependant, de nombreuses questions subsistent quant à l'influence de la structure et de l'architecture du film polymère sur ses propriétés antibactériennes.

En ce qui concerne les infections nosocomiales, les problèmes quotidiens, l'emballage des produits frais et la purification de l'eau, il existe un besoin de revêtements antibactériens stables, robustes et efficaces. Les nanoparticules inorganiques, et en particulier les nanoparticules d'argent, sont souvent choisies pour renforcer l'effet antibactérien des films polymères en termes d'activité et de stabilité. Le problème principal est la libération de ces nanoparticules, en particulier des nanoparticules d'argent toxiques, ou des ions correspondants dans le milieu environnant. A noter que, de manière générale, l'utilisation de nanoparticules d'argent a été limitée en raison du risque de toxicité. D'autres exemples de composites inorganiques comprennent l'utilisation de nanoparticules moins toxiques, tels que ZnO, cuivre ou $TiO_2$. Cependant, la mise sur le marché de films plastiques contenant des nanoparticules inorganiques pour des applications dans le domaine alimentaire par exemple, a rencontré beaucoup de réticences de la part des producteurs.

L'autre voie également explorée notamment dans le domaine de l'emballage consiste en l'adsorption ou le greffage de petites molécules telles que le triclosan, la nisine ou des huiles essentielles comme du thymol ou du carvacrol. Le problème réside dans la libération de ces molécules depuis l'emballage, en raison de leur simple adsorption physique sur le film et/ou de la faible stabilité thermique des molécules aux températures élevées du processus d'emballage. Ceci est un problème sérieux concernant les molécules potentiellement toxiques telles que le triclosan connu comme perturbateur endocrinien, mais aussi dans le cas de molécules «plus sûres» telles que les huiles essentielles. En effet, leur diffusion dans les aliments ou l'environnement (eau) est susceptible d'entraîner une modification du goût. Une voie alternative est d'immobiliser l'agent antimicrobien sur de l'argile de type montmorillonite, afin de contrôler sa diffusion et d'augmenter la stabilité thermique.

L'état de la technique connaît également des revêtements sur lesquels sont immobilisés des agents antimicrobiens. Les peptides antimicrobiens cationiques (ou AMP pour « AntiMicrobial Peptides ») se sont avérés particulièrement efficaces en raison de leur activité antimicrobienne particulière basée sur des interactions, électrostatiques et hydrophobes, non spécifiques **[2].**

Comme déjà évoqué, les polymères antimicrobiens sont particulièrement intéressants car ils possèdent généralement aussi une activité à long terme avec en plus une forte stabilité chimique (réduction de la toxicité résiduelle et de la résistance microbienne). Parmi ceux-ci, les polycations à base de sels d'ammonium quaternaire et avec un caractère amphiphile modulable, ont été décrits comme capables de perturber efficacement la membrane externe et cytoplasmique des cellules entraînant la lyse et donc la mort cellulaire. Il a été mis en évidence que l'un des paramètres clés pour un effet antibactérien efficace du polymère est son caractère amphiphile, à savoir le rapport hydrophobe/charge. Lorsque ces polymères sont utilisés comme des revêtements actifs par contact (bactériostatiques), il a été clairement montré que (i) la présence de chaînes hydrophobes suffisamment longues est nécessaire pour pénétrer et faire éclater la

membrane bactérienne, et (ii) des niveaux élevés en charges positives sont nécessaires pour conférer des propriétés antimicrobiennes, indépendamment de la longueur des chaînes hydrophobes **[1].**

Dans ce contexte, les polyionènes ou ionènes contenant des ammoniums quaternaires, dans la chaîne principale du polymère ou squelette, séparés par des fragments hydrophobes, sont des candidats particulièrement intéressants **[3-7].** En effet, Tiller *et al* ont démontré que les polyionènes présentent des propriétés antimicrobiennes particulièrement efficaces, principalement en raison de la présence de groupes alkyles de longueur variable **[4].** Il a été également montré que ces polymères présentaient une faible cytotoxicité **[5]** et le groupe d'Argawal a aussi introduit des segments éthoxyéthyle et aliphatiques à l'intérieur de la structure d'ionène pour évaluer l'influence de ces segments au niveau de l'activité biocide et renforcer la biocompatibilité de ces polymères **[6].** Plus récemment, une étude complète sur l'activité des ionènes a été réalisée par les groupes de Hedrick et Yang sur des micro-organismes multirésistants (MDR) cliniquement isolés **[7].** Ils ont particulièrement mis en évidence la capacité des ionènes à atténuer la résistance des bactéries.

Le brevet US 4 980 067 propose de revêtir ou de greffer des membranes microporeuses avec des polyionènes et ce, pour éliminer des contaminants de type micro-organismes éventuellement présents dans des liquides biologiques **[8].** Plus particulièrement, ce brevet décrit l'incorporation de polyionènes dans des membranes microporeuses constituées de nylon et potentiellement chargées positivement. Cette incorporation est faite via un procédé utilisant un agent de liaison du type époxy présent sous forme soit d'additif soit de fonctions réactives dans le polymère. Cette dernière stratégie est limitante quant au choix du polyionène à incorporer. Par ailleurs, il n'y a pas de caractérisation des réactions de greffage mises en oeuvre permettant d'affirmer que le polyionène n'est pas simplement adsorbé ou même relargué en solution. En effet, les seuls tests qui sont effectués dans la partie expérimentale de **[8]** sont des tests sur l'inhibition de la croissance des bactéries et la méthode utilisée à savoir la mesure de la densité optique est particulièrement adaptée aux solutions et non aux surfaces.

Shalev et al., Journal of Materials Chemistry 22, 2012, 2026-2032 divulgue un revêtement en polydopamine lié à une surface comprenant des atomes d'oxygène (verre éventuellement revêtu en indium-tin oxyde) et fonctionnalisé avec des composés bactéricides comprenant des groupements d'ammonium quaternaire.

Les inventeurs se sont fixé pour but de proposer un procédé, simple, robuste et industrialisable, permettant d'obtenir un nouveau revêtement actif apte à contrôler, à limiter ou à inhiber la croissance bactérienne de la flore indésirable (altération et pathogène) et ce, aussi bien pour des applications dans le domaine agro-alimentaire que dans le domaine médical, militaire, ou environnemental.

Les inventeurs se sont également fixé pour but de proposer un procédé, simple, robuste et industrialisable, permettant d'obtenir un nouveau revêtement actif ne présentant pas les inconvénients des revêtements de l'art antérieur, notamment en termes de libération de composés.

## EXPOSÉ DE L'INVENTION

La présente invention permet d'atteindre le but que se sont fixé les inventeurs et concerne donc un procédé de préparation d'un revêtement pro-adhésif aux propriétés bactériostatiques ou bactéricides visant à obtenir un piège à bactéries.

Le revêtement préparé par le procédé selon l'invention est basé sur l'utilisation d'un film polymère bactériostatique ou bactéricide à base de polyionènes dans lequel la plupart des bactéries indésirables sont piégées pour limiter leur croissance afin d'éviter leur multiplication sur le produit ou l'environnement. De plus, pour éviter tout phénomène de libération, le procédé selon l'invention implique une succession de revêtements adhérents ou greffés, de façon robuste et/ou covalente, du substrat initial jusqu'aux polymères bactériostatiques ou bactéricides. A cet effet, le procédé selon l'invention met en oeuvre plusieurs étapes d'adhésion, de greffage et/ou de polymérisation du type « grafting-from » qui sont plus adaptées à une incorporation efficace de polymères sur des surfaces notamment pour des raisons d'encombrement stérique. Cet aspect est d'autant plus important que les polymères bactériostatiques ou bactéricides impliqués dans la présente invention sont des polymères chargés.

Par ailleurs, les inventeurs ont montré que l'utilisation de polymères actifs conduit à plusieurs avantages: i) une plus grande quantité de groupes biocides, ii) une plus grande mobilité ce qui est un paramètre important pour les interactions avec la membrane bactérienne, iii) une meilleure stabilité par rapport aux températures, par exemple, utilisées dans les process de mise en oeuvre des films d'emballage. L'utilisation plus particulière de polymères du type polyionènes offre non seulement l'avantage d'avoir une propriété bactériostatique ou bactéricide qui soit à la fois pro-adhésive (les bactéries sont piégées), et modulable au niveau du pouvoir bactéricide. En effet, en fonction des monomères (dihalogènes et diamines) utilisés pour préparer ces polymères, il est possible d'inhiber, en totalité ou en partie, les souches en présence.

Dans le domaine des emballages alimentaires, le revêtement selon l'invention à la fois pro-adhésif et bactériostatique/bactéricide permet de piéger la flore indésirable (altération et pathogène) de manière irréversible et a un impact particulièrement intéressant à la fois économique et environnemental. En effet, il est particulièrement utile pour

une meilleure conservation des produits frais, une diminution de la date limite de consommation (DLC) et une réduction des déchets alimentaires dans le domaine de l'emballage.

Au-delà de l'application dans le domaine agro-alimentaire, la présente invention peut aussi s'appliquer très utilement dans le domaine médical, médico-hospitalier, militaire ou environnemental au sens large, dans la perspective de fabriquer des objets de décontamination ou de purification tels que tige, sonde, papier, textile et membrane et/ou des surfaces de « contenant » telles que barquette, étui et film d'emballage qui puissent avantageusement servir de « pièges à bactéries ». La faible cytotoxicité des polyionènes et leur capacité à limiter la résistance des bactéries sont des atouts pour ce type d'application.

Plus particulièrement, la présente invention concerne un procédé pour conférer des propriétés bactériostatiques ou bactéricides à la surface d'un objet consistant à :

a) fournir un objet dont la surface présente des groupements comprenant au moins un atome d'oxygène ;
b) déposer, sur la surface fournie lors de l'étape (a), un revêtement à base de polymères de polydopamine ou d'un de ses dérivés, portant au moins une fonction -Y avec Y représentant un atome d'halogène ou une fonction -N(R11)(R12) avec R11 et R12, identiques ou différents, représentant un atome d'hydrogène, un groupe alkyle éventuellement substitué ou un groupe aryle éventuellement substitué ; et
c) mettre en contact la surface revêtue obtenue suite à ladite étape (b) avec une solution contenant au moins un dihalogène et au moins une diamine à une température supérieure à la température ambiante, moyennant quoi un revêtement à base de polymères de polyionène est greffé, de façon covalente, sur ladite surface revêtue obtenue suite à ladite étape (b).

Comme précédemment évoqué, la présente invention s'applique à tout objet pouvant servir non seulement dans l'emballage et la conservation des produits mais aussi comme dispositif de décontamination et/ou de purification dans le domaine médico-hospitalier ou de l'environnement. Cet objet peut donc être choisi dans le groupe constitué par un film tel que, par exemple, un film d'emballage, une boîte, une barquette, un étui, un couvercle, un sachet, du matériel de dialyse, une tige, une sonde, du papier, un textile, une membrane et un filtre.

La surface de l'objet peut être une surface inorganique ou organique. Le matériau de cette surface peut être choisi dans le groupe constitué par le verre ; un matériau ou une résine polymère comme du polyéthylène (PE), du polycarbonate (PC), du polystyrène (PS), du polypropylène (PP), du poly(éthylène téréphtalate) (PET), du polyméthacrylate de méthyle (PMMA), une résine époxy, du polyuréthane, etc... ; un matériau métallique comme de l'acier inoxydable, de l'étain ou de l'aluminium ; du silicium ; de la silice ; des argiles ; des céramiques ; des fibres naturelles et des fibres synthétiques.

La première étape du procédé selon la présente invention i.e. l'étape (a) consiste à fournir un objet dont la surface présente une pluralité de groupements, identiques ou différents, comprenant au moins un atome d'oxygène.

Avantageusement, dans le cadre de la présente invention, un groupement comprenant au moins un atome d'oxygène est choisi dans le groupe constitué par un groupement carboxylique (-C(=O)OH), un groupement hydroxyle (-OH), un groupement alcoxyle (-OX avec X représentant un groupe alkyle, un groupe acyle ou un groupe aryle), un groupement carbonyle (-C(=O)-), un groupement percarbonique (-C(=O)-O-OH) et un groupement amide (-C(=O)$NH_2$). Typiquement, dans le cadre de la présente invention, un groupement comprenant au moins un atome d'oxygène est un groupement hydroxyle (-OH).

Dans un mode de réalisation particulier, la surface de l'objet sur lequel est appliqué le procédé de l'invention présente, de par sa nature chimique, de tels groupements.

En variante, lorsque la surface de l'objet sur lequel est appliqué le procédé de l'invention ne présente pas de tels groupements ou lorsque l'on souhaite en augmenter le nombre, la surface est soumise à un traitement oxydant. En d'autres termes, l'étape (a) du procédé selon l'invention consiste à soumettre la surface de l'objet à un traitement oxydant. Ce dernier vise à oxyder la surface de l'objet mis en oeuvre en fixant et/ou en introduisant, sur cette dernière, des groupements riches en oxygène i.e. des groupements comprenant au moins un atome d'oxygène tels que précédemment définis.

Un tel traitement oxydant repose sur deux grands types de modifications de surface fondés sur :

- des traitements physiques tels qu'un traitement par plasma notamment d'oxygène, un traitement aux UV, un traitement aux rayons X ou gamma, un traitement par irradiation aux électrons et aux ions lourds ;
- des traitements chimiques tels qu'un traitement à la potasse alcoolique, un traitement avec un mélange d'acide sulfurique ($H_2SO_4$) et de peroxyde d'hydrogène ($H_2O_2$) également connu sous l'appellation « mélange piranha », un traitement par un acide fort (HCl, $H_2SO_4$, $HNO_3$, $HClO_4$), un traitement à la soude, un traitement par un oxydant fort ($KMnO_4$, $K_2Cr_20_7$, $KClO_3$ ou $CrO_3$ dans l'acide chlorhydrique, l'acide sulfurique ou l'acide nitrique), un traitement à l'ozone et un traitement thermique sous atmosphère oxygénée ($O_2$, $H_2O$,...).

L'homme du métier saura déterminer le traitement, physique et/ou chimique, le mieux adapté en fonction de la nature chimique de la surface de l'objet.

Les éléments essentiels mis en oeuvre lors de l'étape (b) du procédé selon l'invention sont, d'une part, des polymères de polydopamine ou d'un dérivé de polydopamine déposés sur la surface de l'objet et, d'autre part, des fonctions de formule - Y avec Y tel que précédemment défini portées, directement ou indirectement, par les polymères de polydopamine ou d'un dérivé de polydopamine.

Dans ce qui suit et ce qui précède, les expressions « fonction de formule -Y » et « fonction -Y » sont équivalentes et utilisables de façon interchangeable.

Par définition, une fonction de formule -Y est soit un atome d'halogène, soit une fonction du type -N(R11)(R12) avec R11 et R12, identiques ou différents, représentant un atome d'hydrogène, un groupe alkyle éventuellement substitué tel que précédemment défini ou un groupe aryle éventuellement substitué.

Par « groupe aryle », on entend, dans le cadre de la présente invention, tout groupe comprenant un cycle aromatique ou plusieurs cycles aromatiques, identiques ou différents, liés ou connectés par une liaison simple ou par une chaîne hydrocarbonée, un cycle aromatique ayant de 3 à 20 atomes de carbone, notamment de 3 à 14 atomes de carbone et, en particulier, de 3 à 8 atomes de carbone et pouvant éventuellement comprendre un hétéroatome. A titre de groupe aryle utilisable dans l'invention, on peut citer un groupe phényle.

Par « hétéroatome », on entend, dans le cadre de la présente invention, un atome choisi dans le groupe constitué par un azote, un oxygène, un phosphore, un soufre, un silicium, un fluor, un chlore et un brome.

Par « groupe aryle substitué », on entend, dans le cadre de la présente invention, un groupe aryle tel que précédemment défini substitué par un groupement ou plusieurs groupements, identiques ou différents, choisi(s) dans le groupe constitué par un halogène; une amine; une diamine; un carboxyle; un carboxylate; un aldéhyde; un ester; un éther; une cétone; un hydroxyle; un alkyle éventuellement substitué; une amide; un sulphonyle; un sulphoxide; un acide sulphonique; un sulphonate; un nitrile; un nitro; un acyle; un vinyle; un époxy; un phosphonate; un isocyanate; un thiol; un glycidoxy; et un acryloxy.

Par « halogène », on entend, dans le cadre de la présente invention, un atome choisi dans le groupe constitué par un iode, un fluor, un chlore et un brome.

Par « groupe alkyle », on entend un groupe alkyle, linéaire, ramifié ou cyclique, comprenant de 1 à 20 atomes de carbone, notamment de 1 à 15 atomes de carbone et, en particulier, de 1 à 10 atomes de carbone, ledit groupe alkyle pouvant éventuellement comprendre au moins un hétéroatome et/ou au moins une double ou triple liaison carbone-carbone.

Par « groupe alkyle substitué », on entend, dans le cadre de la présente invention, un groupe alkyle tel que précédemment défini substitué par un groupement ou plusieurs groupements, identiques ou différents, choisi(s) dans le groupe constitué par un halogène; une amine; une diamine; un carboxyle; un carboxylate; un aldéhyde; un ester; un éther; une cétone; un hydroxyle; un alkyle éventuellement substitué; une amide; un sulphonyle; un sulphoxide; un acide sulphonique; un sulphonate; un nitrile; un nitro; un acyle; un vinyle; un époxy; un phosphonate; un isocyanate; un thiol; un glycidoxy; et un acryloxy.

Lorsque la fonction de formule -Y représente un atome d'halogène, ce dernier représente avantageusement un atome de brome, un atome de chlore ou un atome d'iode. En particulier, Y représente un atome de brome.

Lorsque la fonction de formule -Y est une fonction du type -N(R11)(R12), les radicaux R11 et R12 sont avantageusement identiques. En particulier, les radicaux R11 et R12 sont identiques et représentent un groupe méthyle ou un éthyle.

Pour rappel, la dopamine est également connue sous le nom de (3,4-dihydroxyphényl)éthylamine. La dopamine et le polymère issu de la polymérisation de la dopamine qu'est la polydopamine présentent les structures chimiques suivantes :

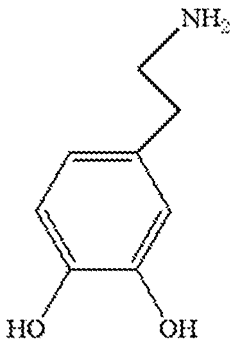

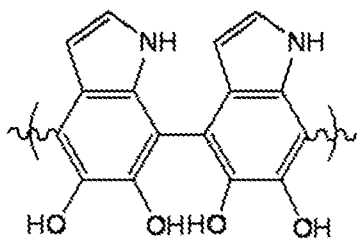

Dopamine Polydopamine

D'un point de vue réactionnel et comme décrit dans la littérature, les groupements catéchols de la dopamine polymérisent et les bras aminés se referment sur le cycle catéchol pour donner la polydopamine. Plus particulièrement, l'oxydation de la dopamine produit du 5,6-dihydroxyindole (DHI) et l'indole-5,6-quinone (QI). Ces précurseurs se lient de manière covalente en oligomères insolubles qui s'agrègent à cause de l'empilement $\pi$ - $\pi$, des transferts de charge et des liaisons hydrogènes **[9].** Les films de polydopamine se forment donc à partir de solutions précurseurs à l'interface de nombreux matériaux, y compris les métaux nobles, les oxydes, les semi-conducteurs, céramiques et les polymères **[10].** Des études ont également montré que les groupements catéchol sont principalement responsables de l'adhésion robuste des films de polydopamine **[11].** Les liaisons décrites par Kohri et Kawamura, 2016 **[12]** comme impliquées dans cette adhésion sont des liaisons de coordination, des liaisons hydrogène et/ou des liaisons hydrophobes.

Par « dérivé de polymère de polydopamine », on entend un polymère obtenu par polymérisation d'un composé de formule (I) telle que définie dans la demande internationale WO 2008/049108 **[13].** Plus précisément, la formule (I) est la suivante :

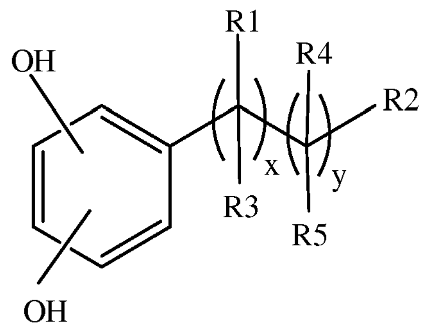

(I)

dans laquelle :

- les groupements R1, R2, R3, R4 et R5 sont indépendamment choisis dans le groupe constitué par un hydrogène, un hydroxyle, un halogénure, un thiol, un aldéhyde, un acide carboxylique, un ester carboxylique, un carboxamide, une amine primaire, une amine secondaire, un nitrile, un imidazole, un azide et un dithiocarbamate de polyhexaméthylène ;
  à condition qu'au moins un groupement parmi les groupements R1, R2, R3, R4 et R5 ne soit pas un hydrogène ;
- x est égal à 0 ou représente un nombre entier compris de 1 à 10, les bornes 1 et 10 étant inclusives ; et
- y est égal à 0 ou représente un nombre entier compris de 1 à 10, les bornes 1 et 10 étant inclusives ;
  à condition que x ou y soit au moins égal à 1.

La présente invention s'applique également à toutes les variantes et toutes les formes de mises en oeuvre préférées des composés de formule (I) telles que décrites dans la demande internationale WO 2008/049108 **[13].**

En particulier, le composé dont la polymérisation aboutit à un dérivé de polydopamine répond à la formule (II) suivante :

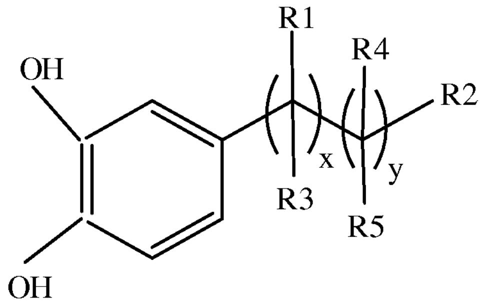

(II)

dans laquelle les groupements R1, R2, R3, R4 et R5, x et y sont tels que définis pour la formule (I).

Plus particulièrement, le composé dont la polymérisation aboutit à un dérivé de polydopamine est choisi parmi la norépinephrine (composé de formule (II) dans laquelle R1 = OH, R2 = $NH_2$ et R3 = R4 = R5 = H), la 3,4-dihydroxy-L-phénylalanine (composé de formule (II) dans laquelle R1 = R3 = R5 = H, R2 = COOH et R4 = $NH_2$), l'ester méthylique de 3,4-dihydroxy-L-phénylalanine (composé de formule (II) dans laquelle R1 = R3 = R5 = H, R2 = $COOCH_3$ et R4 = $NH_2$) et un de leurs sels.

Lors de l'étape (b) du procédé selon l'invention, une autopolymérisation oxydative de la dopamine, d'un de ses dérivés ou d'un de leurs sels est mise en oeuvre. Plus particulièrement, l'étape (b) du procédé selon l'invention comprend au moins une opération consistant à mettre en contact, dans des conditions oxydantes, la surface fournie lors de l'étape (a) avec une solution contenant une dopamine, un de ses dérivés ou un de leurs sels, moyennant quoi un revêtement à base de polymères de polydopamine ou d'un de ses dérivés est déposé sur ladite surface. La solution contenant une dopamine, un de ses dérivés ou un de leurs sels est désignée, ci-après, solution Sb.

L'homme du métier connaît différentes conditions oxydantes utilisables pour obtenir l'autopolymérisation oxydative de la dopamine, d'un de ses dérivés ou d'un de leurs sels. Avantageusement, ces conditions oxydantes peuvent consister en (i) au moins un agent oxydant présent dans la solution Sb, ledit agent oxydant étant notamment choisi parmi le persulfate d'ammonium, le périodate de sodium, le sulfate de cuivre(II), le perchlorate de sodium ou un de leurs mélanges ; (ii) une solution Sb oxygénée ou aérée, l'oxygène jouant, dans cette variante, le rôle d'agent oxydant ou (iii) une solution Sb alcaline i.e. une solution Sb dont le pH est supérieur à 8 et notamment supérieur ou égal à 8,5. Typiquement, les conditions oxydantes lors de l'opération d'autopolymérisation de l'étape (b) consistent à utiliser une solution alcaline contenant une dopamine, un de ses dérivés ou un de leurs sels.

Avantageusement, lors de l'opération d'auto polymérisation de l'étape (b) du procédé selon l'invention, le solvant de la solution Sb est un solvant aqueux et ce, quelles que soient les conditions oxydantes utilisées.

Typiquement, durant l'opération d'autopolymérisation de l'étape (b) du procédé selon l'invention, la solution Sb n'est soumise à aucune agitation.

Sur la base de ses connaissances et d'un travail de routine, l'homme du métier saura déterminer la quantité de dopamine, de son dérivé ou d'un de leurs sels, la quantité d'agent oxydant et la durée de l'opération d'autopolymérisation durant l'étape (b) sans faire preuve d'effort inventif.

Dans une première forme de mise en oeuvre, un polymère de polydopamine ou de dérivé de polydopamine présente, i.e. porte directement, au moins une fonction -Y. En d'autres termes, au moins une fonction -Y est liée, de façon covalente, à un atome de la chaîne principale ou squelette, à un atome d'une chaîne latérale ou à un atome d'un groupe pendant du polymère de polydopamine ou de dérivé de polydopamine.

Dans une première variante de cette première forme de mise en oeuvre, la dopamine, un de ses dérivés ou un de leurs sels présent dans la solution Sb porte une fonction -Y telle que précédemment définie. Par exemple, la fonction -Y peut être ou peut substituer au moins un groupement parmi les groupements R1, R2, R3, R4 et R5 tels que précédemment définis. Aussi, dans cette première variante, l'étape (b) du procédé selon l'invention correspond à l'opération d'autopolymérisation oxydative d'une dopamine, d'un de ses dérivés ou d'un de leurs sels telle que précédemment définie.

Dans une seconde variante de cette première forme de mise en oeuvre, la dopamine, un de ses dérivés ou un de leurs sels présent(e) dans la solution Sb ne porte pas de fonction -Y telle que précédemment définie. Les fonctions -Y sont ajoutées après l'autopolymérisation oxydative en remplaçant une fonction ou plusieurs fonctions, identiques ou différentes, substituant le polymère de dopamine ou de dérivé de dopamine par une ou plusieurs fonction(s) -Y au moyen d'une ou plusieurs réactions chimiques simples. Dans cette seconde variante, l'étape (b) du procédé selon l'invention comprend l'opération d'autopolymérisation oxydative d'une dopamine, d'un de ses dérivés ou d'un de leurs sels telle que précédemment définie suivie d'une opération durant laquelle une fonction ou plusieurs fonctions, identiques ou différentes, substituant le polymère de dopamine ou de dérivé de dopamine est/sont remplacée(s) par une ou plusieurs fonction(s) -Y telle(s) que précédemment définie(s). A titre d'exemples de réaction chimique simple utilisable pour cette substitution, on peut citer une substitution radicalaire ou une addition nucléophile.

Dans une seconde forme de mise en oeuvre, le polymère de polydopamine ou de dérivé de polydopamine porte indirectement au moins une fonction -Y. En d'autres termes, le polymère de polydopamine ou de dérivé de polydopamine porte une molécule, cette dernière portant au moins une fonction -Y telle que précédemment définie. Par « molécule portant une fonction -Y », on entend toute molécule naturelle ou synthétique, avantageusement organique, comprenant de quelques atomes à plusieurs dizaines voire centaines d'atomes. Cette molécule peut donc être une molécule simple ou une molécule présentant une structure plus complexe telle qu'une structure polymère. Quelle que soit la structure de cette molécule, les caractéristiques essentielles dans le cadre de la présente invention sont le fait que :

- d'une part, la molécule est liée au polymère de polydopamine ou de dérivé de polydopamine mis en oeuvre de façon covalente, au moyen d'une liaison impliquant un atome de ladite molécule et un atome dudit polymère, ladite molécule comprend donc une fonction impliquée dans la liaison covalente avec le polymère de polydopamine ou de dérivé de polydopamine ;
- d'autre part, la molécule comprend une fonction -Y telle que précédemment définie.

Il est clair pour l'homme du métier que la fonction de formule -Y est différente de la fonction impliquée dans la liaison covalente avec le polymère de polydopamine ou de dérivé de polydopamine.

Dans une première variante de cette seconde forme de mise en oeuvre (cas des molécules simples), la molécule portant au moins une fonction -Y est greffée, de façon covalente, sur le polymère de polydopamine ou de dérivé de polydopamine par post-fontionnalisation de ce polymère. Dans cette première variante, l'étape (b) du procédé selon l'invention comprend l'opération d'autopolymérisation oxydative d'une dopamine, d'un de ses dérivés ou d'un de leurs sels telle que précédemment définie suivie d'une opération durant laquelle une molécule portant au moins une ou plusieurs fonction(s) -Y telle(s) que précédemment définie(s) est greffée, de façon covalente, sur le polymère de polydopamine ou de dérivé de polydopamine par post-fonctionnalisation. Lors de cette post-fonctionnalisation, un dérivé halogéné et notamment un dérivé chloré de la molécule à greffer peut être utilisé. La partie expérimentale fournit ci-après un exemple d'une telle post-fonctionnalisation.

Dans une seconde variante de cette seconde forme de mise en oeuvre (cas des molécules complexes), un ou plusieurs polymères porteur(s) d'au moins une ou plusieurs fonction(s) -Y telle(s) que précédemment définie(s) est/sont greffé(s), de façon covalente, sur le polymère de polydopamine ou d'un dérivé de celle-ci. Ainsi, dans cette seconde variante, l'étape (b) du procédé selon l'invention comprend l'opération d'autopolymérisation oxydative d'une dopamine, d'un de ses dérivés ou d'un de leurs sels telle que précédemment définie suivie d'une opération durant laquelle un ou plusieurs polymères porteur(s) d'au moins une ou plusieurs fonction(s) -Y telle(s) que précédemment définie(s) est/sont greffé(s), de façon covalente, sur le polymère de polydopamine ou d'un dérivé de celle-ci. Le greffage de polymères mis en oeuvre lors de la seconde variante de la seconde forme de mise en oeuvre est notamment un greffage chimique radicalaire, bien connu dans l'état de la technique **[14].**

L'expression « greffage chimique radicalaire » a, dans la présente invention, la même définition que dans la demande internationale WO 2008/078052 **[15].** Il se réfère ainsi à l'utilisation d'entités moléculaires possédant un électron non apparié pour former des liaisons de type liaison covalente avec le polymère de polydopamine ou un de ses dérivés, lesdites entités moléculaires étant générées indépendamment du polymère de polydopamine ou de son dérivé sur lequel elles sont destinées à être greffées. La réaction radicalaire conduit donc à la formation de liaisons covalentes entre le polymère de polydopamine ou son dérivé et le (ou les) polymère(s) organique(s) porteur(s) d'au moins une ou plusieurs fonction(s) -Y.

Les polymères organiques greffés à la surface du polymère de polydopamine ou de son dérivé forment une couche organique qui peut être définie comme un film organique ou un revêtement organique greffé à la surface du polymère de polydopamine ou de son dérivé.

Comme envisagé dans la demande internationale WO 2008/078052 **[15],** les unités monomères dont est issu chaque polymère organique sont des unités dérivées d'au moins un sel d'aryle diazonium et éventuellement d'au moins un monomère polymérisable par voie radicalaire avantageusement distinct d'un sel d'aryle diazonium. La première unité moléculaire de chaque polymère organique greffé est issue d'un sel d'aryle diazonium.

Dans cette seconde variante de cette seconde forme de mise en oeuvre, l'opération de greffage lors de l'étape (b) consiste à mettre en contact la surface revêtue obtenue suite à l'opération d'autopolymérisation oxydative de ladite étape (b) avec une solution contenant au moins un sel d'aryle diazonium et éventuellement au moins un monomère polymérisable par voie radicalaire différent d'un sel d'aryle diazonium et à soumettre ladite solution à des conditions non électrochimiques, à condition que

lorsque ladite solution ne contient pas de monomère polymérisable par voie radicalaire, ledit sel d'aryle diazonium présente au moins une fonction -Y telle que précédemment définie,

lorsque ladite solution contient au moins un sel d'aryle diazonium et au moins un monomère polymérisable par voie radicalaire, ledit sel d'aryle diazonium et/ou ledit monomère polymérisable par voie radicalaire présente au moins

une fonction de formule -Y,
moyennant quoi des entités radicalaires sont formées à partir dudit sel d'aryle diazonium et un revêtement à base de polymères, identiques ou différents, présentant au moins une fonction de formule -Y est greffé, de façon covalente, sur ladite surface revêtue obtenue suite à ladite opération d'autopolymérisation oxydative.

Pour rappel et comme envisagé dans la demande internationale WO 2008/078052 **[15],** les unités monomères dont est issu chaque polymère organique peuvent être des unités uniquement dérivées d'un (ou plusieurs) sel(s) d'aryle diazonium et ce, lorsqu'aucun monomère polymérisable par voie radicalaire distinct d'un sel d'aryle diazonium n'est mis en oeuvre.
Un sel d'aryle diazonium est un composé de formule (III) :

$$R\text{-}N_2^+, A^- \qquad (III)$$

dans laquelle :

- A représente un anion monovalent et
- R représente un groupe aryle éventuellement substitué tel que précédemment défini.

Au sein des sels d'aryle diazonium et notamment des composés de formule (III) ci-dessus, R est, de préférence, choisi parmi les groupes aryles substitués par des groupements attracteurs d'électrons tels que $NO_2$, C(O)H, les cétones, CN, $CO_2H$, $NH_2$ (sous forme de $NH_3^+$), les esters et les halogènes. Les groupes R de type aryle particulièrement préférés sont les radicaux carboxyphényle, aminophényle, nitrophényle et phényle, lesdits radicaux étant éventuellement substitués par un ou plusieurs atomes d'halogène et notamment de fluor.
Au sein des composés de formule (III) ci-dessus, A peut notamment être choisi parmi les anions inorganiques tels que les halogénures comme $I^-$, $Br^-$ et $Cl^-$, les halogénoborates tels que le tétrafluoroborate, les perchlorates et les sulfonates et les anions organiques tels que les alcoolates et les carboxylates.
A titre de composés de formule (III), il est particulièrement avantageux d'utiliser un composé choisi dans le groupe constitué par le tétrafluoroborate de phényldiazonium, le tétrafluoroborate de 4-nitrophényldiazonium, le tétrafluoroborate de 4-bromophényldiazonium, le chlorure de 4-aminophényldiazonium, le chlorure de 4-aminométhylphényldiazonium, le chlorure de 2-méthyl-4-chlorophényldiazonium, le tétrafluoroborate de 4-benzoylbenzènediazonium, le tétrafluoroborate de 4-cyanophényldiazonium, le tétrafluoroborate du 4-carboxyphényldiazonium, le tétrafluoroborate de 4-acétamidophényldiazonium, le tétrafluoroborate de l'acide 4-phénylacétique diazonium, le sulfate de 2-méthyl-4-[(2-méthylphényl)diazényl]benzènediazonium, le chlorure de 9,10-dioxo-9,10-dihydro-1-anthracènediazonium, le tétrafluoroborate de 4-nitronaphtalènediazonium, le tétrafluoroborate de naphtalènediazonium et le tétrafluoroborate d'hexadécafluoro-octylbenzènediazonium.
En absence de monomère polymérisable par voie radicalaire différent d'un sel d'aryle diazonium, la solution réactive mise en oeuvre lors de l'opération de greffage lors de l'étape (b) du procédé selon la présente invention, ci-après désignée solution Sb', peut contenir (i) un seul sel d'aryle diazonium (i.e. un seul type de sel d'aryle diazonium), ce dernier étant porteur d'au moins une fonction -Y telle que précédemment définie ou (ii) plusieurs sels d'aryle diazonium différents (i.e. plusieurs types de sel d'aryle diazonium) parmi lesquels au moins un sel d'aryle diazonium est porteur d'au moins une fonction -Y telle que précédemment définie. Ceci s'applique également lorsque la solution Sb' présente un ou plusieurs monomère(s) polymérisable(s) par voie radicalaire différent(s) d'un sel d'aryle diazonium et qu'aucun d'eux ne porte de fonction -Y.
Dans le cadre de la présente invention tout comme dans le cadre de la demande internationale WO 2008/078052 **[15],** le sel d'aryle diazonium peut être soit introduit dans la solution Sb' en l'état, soit préparé *in situ* notamment dans cette dernière.
Lorsque le sel d'aryle diazonium est préparé *in situ,* on utilise avantageusement un précurseur d'un tel sel d'aryle diazonium qui, généralement, présente une stabilité plus importante que le sel d'aryle diazonium dans les mêmes conditions environnementales. Les arylamines sont des précurseurs des sels d'aryle diazonium. En effet, par simple réaction, par exemple, avec du NaNOz dans un milieu aqueux acide, ou avec du $NOBF_4$ en milieu organique, il est possible de former les sels d'aryle diazonium correspondants.
Un précurseur avantageusement mis en oeuvre dans le cadre de la présente invention est un précurseur de sels d'aryle diazonium de formule (IV) suivante :

$$R\text{-}NH_2 \qquad (IV),$$

R étant tel que précédemment défini.
A titre d'exemples non limitatifs, un précurseur susceptible d'être mis en oeuvre dans le cadre de la présente

invention est, en particulier, choisi dans le groupe constitué par la 4-aminophénylamine (ou *p*-phénylènediamine ou encore 1,4-diaminophénylène), la 4-nitrophénylamine, l'acide 4-amino-benzoïque, la 4-aminométhylphénylamine et leurs dérivés halogénés et notamment fluorés.

Par « monomère polymérisable par voie radicalaire », on entend un monomère susceptible de polymériser en conditions radicalaires après amorçage par une entité chimique radicalaire. Typiquement, il s'agit d'un monomère comportant au moins une liaison de type éthylénique i.e. une molécule de type éthylénique ou une molécule à insaturation éthylénique.

Parmi ces derniers, les monomères vinyliques, notamment ceux décrits dans les demandes internationales WO 2005/033378 et WO 2006/097611 sont particulièrement concernés **[16, 17].**

Selon une forme de réalisation particulièrement avantageuse de l'invention, le (ou les) monomère(s) vinylique(s) est(sont) choisi(s) parmi les monomères de formule (V) suivante :

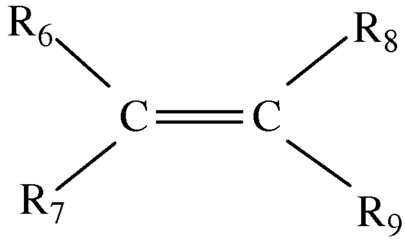
(V)

dans laquelle les groupes R6 à R9, identiques ou différents, représentent un atome monovalent non métallique tel qu'un atome d'halogène, un atome d'hydrogène, un groupe chimique saturé ou insaturé, tel qu'un groupe alkyle éventuellement substitué, aryle éventuellement substitué, nitrile, carbonyle, amine, amide ou un groupe -COOR10 dans lequel R10 représente un atome d'hydrogène ou un groupe alkyle éventuellement substitué tel que précédemment défini.

Les monomères de formule (V) ci-dessus sont en particulier choisis dans le groupe constitué par l'acide acrylique, l'acétate de vinyle, l'acrylonitrile, le méthacrylonitrile, les méthacrylates ou acrylates suivants : méthacrylate (ou acrylate) de méthyle, le méthacrylate (ou acrylate) d'éthyle, le méthacrylate (ou acrylate) de butyle, le méthacrylate (ou acrylate) de propyle, le méthacrylate (ou acrylate) d'hydroxyéthyle, le méthacrylate d'hydroxypropyle, le méthacrylate de glycidyle, le diméthylamino méthacrylate, le diéthylamino méthacrylate et leurs dérivés ; les méthacrylates (ou acrylates) halogénés type méthacrylate de chloro ou bromo-éthyle, les acrylamides et notamment les méthacrylamides d'amino-éthyle, -propyle, -butyle, -pentyle et -hexyle, les cyanoacrylates, les di-acrylates et di-méthacrylates, les tri-acrylates et tri-méthacrylates, les tétra-acrylates et tétra-méthacrylates (tels que le pentaérythritol tétraméthacrylate), le styrène et ses dérivés, le parachloro-styrène, le pentafluoro-styrène, la N-vinyl pyrrolidone, la 4-vinyl pyridine, la 2-vinyl pyridine, les halogénures de vinyle, d'acryloyle ou de méthacryloyle, le di-vinylbenzène, et plus généralement les agents réticulants vinyliques ou à base d'acrylate, de méthacrylate, et de leurs dérivés.

Lorsqu'aucun du ou des sels d'aryle diazonium présent(s) dans la solution Sb' ne porte de fonction -Y telle que précédemment définie, cette solution comprend au moins un monomère polymérisable par voie radicalaire différent d'un sel d'aryle diazonium portant au moins une fonction -Y telle que précédemment définie. Dans une forme de mise en oeuvre particulière, la solution Sb' comprend au moins un sel d'aryle diazonium porteur d'au moins une fonction -Y et au moins un monomère polymérisable par voie radicalaire et différent d'un sel d'aryle diazonium porteur d'au moins une fonction -Y, identique à ou différente de la fonction portée par le sel d'aryle diazonium.

Lorsqu'un monomère polymérisable par voie radicalaire différent d'un sel d'aryle diazonium est porteur d'une fonction -Y, cette dernière peut correspondre à un des groupes R6 à R9 tels que précédemment définis ou une fonction substituant un des groupes R6 à R9 tels que précédemment définis.

La quantité de sels d'aryle diazonium, de précurseurs de sels d'aryle diazonium, de monomères polymérisables par voie radicalaire utilisables dans la solution Sb' est conforme aux quantités envisagées dans la demande internationale WO 2008/078052 **[15].** De même, par un travail de routine, l'homme du métier saura déterminer, sans effort inventif, la durée de l'opération de greffage lors de l'étape (b) du procédé selon la présente invention.

Enfin, la solution Sb' mise en oeuvre dans le cadre de la présente invention est une solution liquide pouvant contenir, en tant que solvant, un solvant qui peut être :

- soit un solvant protique, i.e. un solvant qui comporte au moins un atome d'hydrogène susceptible d'être libéré sous forme de proton et avantageusement choisi dans le groupe constitué par l'eau, l'eau désionisée, l'eau distillée, acidifiée ou basique, l'acide acétique, les solvants hydroxylés comme le méthanol et l'éthanol, les glycols liquides de faible poids moléculaire tels que l'éthylèneglycol, et leurs mélanges ;
- soit un solvant aprotique, i.e. un solvant qui n'est pas susceptible de libérer un proton ou d'en accepter un dans des conditions non extrêmes et avantageusement choisi parmi la diméthylformamide (DMF), l'acétone, l'acétonitrile et

le diméthyl sulfoxyde (DMSO) ;
- soit un mélange d'au moins un solvant protique et d'au moins un solvant aprotique.

La solution Sb' mise en oeuvre dans le cadre de la présente invention peut également contenir un (ou plusieurs) tensio-actif(s) notamment choisi(s) dans le groupe constitué par les tensio-actifs anioniques, les tensio-actifs cationiques, les tensio-actifs zwitterioniques, les tensio-actifs amphotères et les tensio-actifs neutres (non-ioniques) et, notamment, les tensio-actifs décrits dans la demande internationale WO 2008/078052 **[15].** Typiquement la concentration en tensio-actif(s), lorsque présent(s), sera comprise entre 0,5 mM et 5 M environ, de préférence entre 0,1 mM et 150 mM environ.

Lors de l'opération de greffage durant l'étape (b) du procédé selon l'invention, la mise en contact de la surface obtenue suite à l'opération d'autopolymérisation oxydative avec la solution Sb' et l'application de la condition non électrochimique peuvent être réalisées simultanément ou l'une après l'autre. Dans ce dernier cas, la condition non électrochimique est typiquement appliquée une fois la mise en contact réalisée.

Toutes les conditions non électrochimiques envisagées dans la demande internationale WO 2008/078052 **[15]** et notamment décrites de la page 16, ligne 4 à la page 27, ligne 24 sont utilisables dans le cadre de l'opération de greffage durant l'étape (b) de la présente invention. Pour rappel, de telles conditions non électrochimiques sont des conditions qui permettent la formation d'entités radicalaires à partir d'un sel d'aryle diazonium en l'absence de l'application d'une quelconque tension électrique à la solution le contenant, au polymère de polydopamine ou à son dérivé, ou à la surface sur laquelle le polymère de polydopamine ou son dérivé est déposé. Ces conditions impliquent des paramètres tels que, par exemple, la température, la nature du solvant présent dans la solution réactive, la présence d'un additif particulier, l'agitation, la pression alors que le courant électrique n'intervient pas lors de la formation des entités radicalaires.

Les conditions permettant la formation d'entités radicalaires sont nombreuses et ce type de réaction est connu et étudié en détail dans l'art antérieur. Il est ainsi par exemple possible d'agir sur l'environnement thermique, cinétique, chimique ou photochimique du sel d'aryle diazonium afin de le déstabiliser pour qu'il forme une entité radicalaire. Il est bien entendu possible d'agir simultanément sur plusieurs de ces paramètres.

Avantageusement, les conditions mises en oeuvre dans le cadre de la présente invention sont choisies dans le groupe constitué par les conditions thermiques, les conditions chimiques, les conditions photochimiques et leurs combinaisons entre elles et/ou avec les conditions cinétiques. Les conditions mises en oeuvre dans le cadre de la présente invention sont plus particulièrement des conditions chimiques ou photochimiques et, tout particulièrement, des conditions chimiques.

En particulier, la condition non électrochimique mise en oeuvre lors de l'étape (c) est une condition chimique utilisant un amorceur chimique, notamment un amorceur essentiellement chimique, en particulier, un réducteur organique et, plus particulièrement, de l'acide ascorbique.

La dernière étape du procédé selon l'invention i.e. l'étape (c) consiste à greffer, de façon covalente, des polymères de type ionène sur les polymères (polymères de dopamine ou de dérivé de polydopamine éventuellement post-fonctionnalisés ou autres polymères) porteurs d'une ou plusieurs fonction(s) -Y obtenus suite à l'étape (b) et formant le revêtement à base de polymères porteurs d'une ou plusieurs fonction(s) -Y.

Par « polymère de type ionène », on entend, dans le cadre de la présente invention, un polymère cationique dont tout ou partie des charges positives sont apportées par des ammoniums quaternaires présents dans la chaîne principale du polymère, lesdites charges positives étant séparées par des segments hydrophobes. Dans ce qui suit et ce qui précède, les expressions « polymère de type ionène », « ionène » et « polyionène » sont équivalentes et utilisables de façon interchangeable.

Tout polymère de type ionène susceptible d'être obtenu par réaction d'une diamine et d'un dihalogène est utilisable dans le cadre de la présente invention.

Avantageusement, la diamine présente dans la solution mise en oeuvre lors de l'étape (c) du procédé selon la présente invention, ci-après désignée solution Sc, est de formule (VI) :

(R13)(R14)N-A-N(R15)(R16)  (VI)

dans laquelle

- R13, R14, R15 et R16, identiques ou différents, représentent un groupe alkyle éventuellement substitué ou un groupe aryle éventuellement substitué ;
- A est une chaîne choisie dans le groupe constitué par une chaîne alkylène éventuellement substituée, une chaîne alcénylène ou alcynylène éventuellement substituée, une chaîne arylène éventuellement substituée, une chaîne alkylarylène éventuellement substituée et une chaîne arylalkylène éventuellement substituée.

A titre d'exemples particuliers de groupes alkyles utilisables pour R13 à R16, on peut citer les groupes méthyle,

éthyle, n-propyle, isopropyle, butyle, isobutyle, sec-butyle, tert-butyle, pentyle, isopentyle, hexyle, heptyle, octyle et nonyle.

A titre d'exemples particuliers de groupes aryles utilisables pour R13 à R16, on peut citer les groupes phényle, biphényle, naphthyle, anthracényle, cyclopentadiényle, pyrényle ou encore naphthyle.

Par « chaîne alkylène », on entend, dans le cadre de la présente invention, une chaîne alkylène, linéaire, ramifiée ou cyclique, comprenant de 1 à 30 atomes de carbone, notamment de 1 à 20 atomes de carbone et, en particulier, de 1 à 15 atomes de carbone, ladite chaîne alkylène pouvant éventuellement comprendre au moins un hétéroatome. A titre d'exemples de chaînes alkylènes utilisables dans l'invention, on peut citer une chaîne méthylène, éthylène, propylène, butylène, pentylène, hexylène, heptylène, octylène, decylène, undécylène, dodécylène et une chaîne de formule $-(CH_2)_n-O-(CH_2)_m-$ ou $-(CH_2)_n-S-(CH_2)_m-$ avec n et m, identiques ou différents, représentant 0 ou un nombre entier compris entre 1 and 20 et avec n+m supérieur ou égal à 1.

Par « chaîne alcénylène ou alcynylène », on entend, dans le cadre de la présente invention, une chaîne alcénylène ou alcynylène, linéaire, ramifiée ou cyclique, comprenant de 2 à 30 atomes de carbone, notamment de 2 à 20 atomes de carbone et, en particulier, de 2 à 15 atomes de carbone, ladite chaîne alcénylène ou alcynylène pouvant éventuellement comprendre au moins un hétéroatome.

Par « chaîne arylène », on entend, dans le cadre de la présente invention, toute chaîne comprenant un cycle aromatique ou plusieurs cycles aromatiques, identiques ou différents, liés ou connectés par une liaison simple ou par une chaîne hydrocarbonée, un cycle aromatique ayant de 3 à 20 atomes de carbone, notamment de 3 à 14 atomes de carbone et, en particulier, de 3 à 8 atomes de carbone et pouvant éventuellement comprendre un hétéroatome. A titre d'exemples de chaînes arylènes utilisables dans l'invention, on peut citer une chaîne phénylène ou biphénylène.

Par « chaîne alkylarylène », on entend, dans le cadre de la présente invention, toute chaîne dérivée d'une chaîne arylène telle que précédemment définie dont un atome d'hydrogène est remplacé par un groupe alkyle tel que précédemment défini.

Par « chaîne arylalkylène », on entend, dans le cadre de la présente invention, toute chaîne dérivée d'une chaîne alkylène telle que précédemment définie dont un atome d'hydrogène est remplacé par un groupe aryle tel que précédemment défini.

Par « chaîne alkylène substituée », « chaîne alcénylène ou alcynylène substituée », « chaîne arylène substituée », « chaîne alkylarylène substituée » et « chaîne arylalkylène substituée », on entend, dans le cadre de la présente invention une chaîne alkylène, une chaîne alcénylène ou alcynylène, une chaîne arylène, une chaîne alkylarylène et une chaîne arylalkylène telles que précédemment définies substituées par un groupement ou plusieurs groupements, identiques ou différents, choisi(s) dans le groupe constitué par un carboxyle; un carboxylate; un aldéhyde; un ester; un éther; une cétone; un hydroxyle; un alkyle éventuellement substitué; une amide; un sulphonyle; un sulphoxide; un acide sulphonique; un sulphonate; un nitrile; un nitro; un acyle; un vinyle; un époxy; un phosphonate; un isocyanate; un thiol; un glycidoxy; et un acryloxy.

Dans une forme de mise en oeuvre particulière, les radicaux R13, R14, R15 et R16 sont identiques. Dans une forme de mise en oeuvre plus particulière, les radicaux R13, R14, R15 et R16 sont identiques et représentent un méthyle ou un éthyle.

Avantageusement, le dihalogène présent dans la solution Sc est de formule (VII) :

$$(R17)\text{-}B\text{-}(R18) \qquad (VII)$$

dans laquelle

- R17 et R18, identiques ou différents, représentent un halogène ; et
- B est une chaîne choisie dans le groupe constitué par une chaîne alkylène éventuellement substituée, une chaîne alcénylène ou alcynylène éventuellement substituée, une chaîne arylène éventuellement substituée, une chaîne alkylarylène éventuellement substituée et une chaîne arylalkylène éventuellement substituée.

Dans une forme de mise en oeuvre particulière, les radicaux R17 et R18 sont identiques. Dans une forme de mise en oeuvre plus particulière, les radicaux R17 et R18 sont identiques et représentent un atome de brome, un atome de chlore ou un atome d'iode. Dans une forme de mise en oeuvre plus particulière encore, les radicaux R17 et R18 sont identiques et représentent un atome de brome.

La réaction chimique mise en oeuvre lors de l'étape (c) est une polyaddition également connue sous l'expression de « réaction de Menschutkin ». Les fonctions R13, R14, R15 et R16 portées par la diamine et les fonctions R17 et R18 portées par le dihalogénure sont les fonctions réactives lors de cette réaction. Or, en présence des polymères adhérents et/ou greffés suite à l'étape (b) i.e. polymères porteurs d'une ou plusieurs fonctions -Y et du fait de la définition de telles fonctions, ces dernières sont également des fonctions réactives lors de la réaction de polyaddition ce qui provoque la création des liaisons covalentes entre les polymères adhérents et/ou greffés suite à l'étape (b) et les polymères de type

polyionène durant l'étape (c). En d'autres termes, toute ou partie des fonctions -Y portées par les polymères adhérents et/ou greffés suite à l'étape (b) ont été remplacées par des fonctions covalentes liant ces polymères aux polymères de type polyionène suite à l'étape (c).

L'étape (c) est réalisée à une température supérieure à la température ambiante. Par « température ambiante », on entend une température de 23°C ± 5°C. Avantageusement, la température lors de l'étape (c) est supérieure à 30°C. Typiquement, la température lors de l'étape (c) est comprise entre 40°C et 80°C, en particulier, entre 55°C et 75°C et, plus particulièrement, est de l'ordre de 65°C (i.e. 65°C ± 5°C).

Avantageusement, le solvant de la solution Sc est un solvant polaire, protique ou aprotique. Le solvant de la solution Sc est notamment un solvant hydroxylé et, en particulier, du méthanol ou de l'éthanol.

Par un travail de routine, l'homme du métier saura déterminer, sans effort inventif, la quantité de diamine et d'halogénure à mettre en oeuvre en fonction notamment de leur solubilité dans la solution Sc ainsi que la durée de l'étape (c). A titre d'exemple, cette durée peut être comprise entre 6 h et 30 h, notamment entre 12 h et 24 h et, en particulier, être de l'ordre de 16 h (i.e. 16 h ± 2 h).

Dans le cadre du procédé selon l'invention, il peut être nécessaire d'éliminer, avant l'étape suivante, tout composé de l'étape en cours n'ayant pas réagi et/ou susceptible d'affecter les étapes suivantes. Par conséquent, au moins une étape de lavage suivie par une étape de rinçage existe entre l'étape (a) et l'étape (b), entre les différentes opérations lors de l'étape (b) et/ou entre l'étape (b) et l'étape (c). Il est ainsi possible de réaliser, entre l'étape (a) et l'étape (b), entre les différentes opérations lors de l'étape (b) et/ou entre l'étape (b) et l'étape (c), un, deux, trois, quatre ou cinq lavage(s) avec des solutions identiques ou différentes, avant l'étape de séchage. La solution de lavage est notamment choisie dans le groupe constitué par de l'eau distillée, de l'eau désionisée, de l'eau désionisée MilliQ, de l'acétone et de l'éthanol. Avantageusement, l'étape de séchage est réalisée sous azote. La partie expérimentale ci-après propose des séquences d'étapes de lavage suivies d'une étape de séchage, applicable à tout procédé selon l'invention.

La présente invention concerne également un objet présentant une surface à laquelle des propriétés bactériostatiques ou bactéricides ont été conférées conformément au procédé tel que précédemment défini. Tout ce qui a été précédemment décrit pour l'objet et sa surface s'applique également à cet aspect de l'invention.

Enfin, la présente invention concerne l'utilisation d'un tel objet pour emballer et/ou conserver des produits alimentaires comme des produits alimentaires frais. Les revêtements peuvent permettre également de préserver une flore d'intérêt technologique et éliminer une flore indésirable telle qu'une flore d'altération ou pathogène.

L'invention concerne également l'utilisation d'un tel objet pour purifier et/ou décontaminer une solution, un objet ou une surface et ce, notamment dans le domaine environnemental ou médico-hospitalier.

D'autres caractéristiques et avantages de la présente invention apparaîtront encore à l'homme du métier à la lecture des exemples ci-après donnés à titre illustratif et non limitatif, en référence aux figures annexées.

## BRÈVE DESCRIPTION DES DESSINS

La Figure 1 présente une schématisation du procédé de chimie de surface pour la préparation de surfaces en verre ou en PE, greffées avec des ionènes, conformément à une forme de mise en oeuvre de l'invention.

La Figure 2 présente les spectres FTIR de la couche externe à différentes étapes de la procédure de chimie de surface: polydopamine (PDOPA), poly(diméthylaminoéthyl méthacrylate) (PDMA), polyionène 6,6 (PI 6.6).

La Figure 3 présente les spectres de mesures XPS des différentes couches: (A) polydopamine (PDOPA), (B) poly(diméthylamino méthacrylate) (PDMA), (C) polyionène 3,3 (PI 3.3), (D) polyionène 6,6 (PI 6.6) et (E) polyionène 6,12 (PI 6.12).

La Figure 4 présente les spectres XPS haute résolution d'azote N 1s pour les différentes couches: (A) polydopamine (PDA), (B) poly(diméthylamino méthacrylate) (PDMA), (C) polyionène 3,3 (PI 3.3), (D) polyionène 6,6 (PI 6.6) et (E) polyionène 6,12 (PI 6.12).

La Figure 5 présente les spectres XPS haute résolution d'azote N 1s pour les différentes couches: film PE (PE), polydopamine (PE-PDOPA) et polyionène 3,3 (PE-PI).

La Figure 6a présente le dénombrement en viable cultivable par UFC de souches de S. *aureus* sur des surfaces de verre modifiées avec du poly(diméthylaminoéthylméthacrylate, polyionène 3,3, polyionène 6,6, polyionène 6,9 et polyionène 6,12.

La Figure 6b présente le pourcentage d'inhibition des bactéries (*S. aureus*) pour chaque type de films de polyionènes greffés avec comme référence le verre natif.

La Figure 7 présente le pourcentage d'efficacité (viable/cultivable) de chaque type de films de polyionènes greffés avec comme référence les bactéries (S. aureus) adhérées initialement sur les films.

La Figure 8 présente les courbes de densité optique des différentes concentrations de surnageants des substrats

modifiés avec du PI 3,3.

La Figure 9 présente le dénombrement en viable cultivable par UFC de souches de S. *aureus* sur des surfaces de verre modifiées avec du poly(chlorure de (2-méthacryloyloxy) éthyle triméthylammonium) (PMTAC), polyionène 3,3 (PI 3.3) et polyionène 6,6 (PI 6.6).

La Figure 10a présente l'analyse du premier bain de nettoyage au méthanol d'une surface de PE greffée avec du PI 6,6 par chromatographie d'exclusion couplée avec la mesure de la diffusion de la lumière sous multiples angles (SEC-MALS).

La Figure 10b présente l'analyse du deuxième bain de nettoyage au méthanol d'une surface de PE greffée avec du PI 6,6 par SEC-MALS.

La Figure 10c présente l'analyse du troisième bain de nettoyage au méthanol d'une surface de PE greffée avec du PI 6,6 par SEC-MALS.

## EXPOSÉ DÉTAILLÉ DE MODES DE RÉALISATION PARTICULIERS

### I. Matériel et Méthodes

Tous les réactifs ont été obtenus auprès d'Aldrich Chemical Co et ont été utilisés tels que reçus. Les lames de verre (3,25 $cm^2$) ont été reçues de Thermo-Fisher. Les films de polyéthylène (PE) ont été fournis par la Division Plastique de Bolloré.

### I.1. Activation des surfaces de verre ou de PE

Les lames de verre ont été lavées avec une solution piranha oxydante ($H_2SO_4/H_2O_2$ 75/25) pendant 30 min, avant d'être rincées avec un grand volume d'eau désionisée Milli-Q et séchées sous azote.

Les films de PE préalablement coronés chez le fabriquant sont « réactivés » *via* un traitement par plasma avec les conditions suivantes : mélange gaz $O_2$/Ar (95/5) pendant 5 min.

### I.2. Revêtement à base de polydopamine sur surfaces de verre ou de PE (PDOPA-verre ou PDOPA-PE)

Les surfaces de verre activées ont ensuite été trempées dans une solution aqueuse de dopamine (1 mg/mL avec un pH ajusté à 11 en utilisant du NaOH 1 M) de 1 h à 48 h sans agitation. Après ce traitement, les lames de verre sont ensuite rincées avec de l'eau désionisée Milli-Q et de l'éthanol. Pour finir, les échantillons sont séchés sous azote.

Sur les films de PE, des solutions de dopamine plus concentrées peuvent être utilisées (3 à 7 mg/mL) et le pH ajusté à 8,5 avec une solution Tris-HCl (10 mM). Les conditions opératoires utilisées dans ce cas sont inspirées de Ryu *et al,* 2018 **[18].** Les mêmes lavages que sur le verre sont effectués avant de passer à l'étape suivante.

### I.3. Introduction des fonctions diméthylamino

**i.** *Greffage de poly(diméthylaminoéthylméthacrylate) sur les surfaces de verre ou de PE (PDMA-grafted surfaces)*

La polymérisation du méthacrylate de diméthylaminoéthyle (DMA) a été réalisée selon le procédé Graftfast™. Le sel de nitrobenzène diazonium a été synthétisé *in-situ* à partir de nitroaniline (0,551 g) dans 20 mL de HCl 0,5 M et de nitrite de sodium (0,276 g) dans 12 mL de HCl 0,5 M. La réaction a été laissée sous agitation pendant 10 min. A ce mélange de nitroaniline et de nitrite de sodium, est ajoutée, goutte à goutte, une solution de DMA (86,7 mg/ml) dans du DMF. Les surfaces de verre revêtues de PDOPA ont ensuite été placées horizontalement sur une grille puis recouvertes de la solution préparée. La polymérisation a été amorcée par introduction d'une solution d'un agent réducteur (acide L-ascorbique à 9 mg/mL) dans l'eau. Après une heure, la solution réactive est enlevée et les échantillons sont ensuite rincés avec de l'acétone, de l'eau désionisée et de l'éthanol, avant d'être séchés sous azote. Le même protocole est utilisé pour des films de PE revêtus de PDOPA.

**ii.** *Post-fonctionnalisation du film de polydopamine*

Dans un réacteur conditionné sous argon, les lames de verre ou les films de PE sont introduites avant l'ajout du THF (28 mL) et de 4 g de DMABC (chlorure de 4-(diméthylamino)benzoyle). Le mélange réactionnel sous agitation est légèrement chauffé (bain d'eau chaude) pour favoriser la dilution de tout le DMABC. Ensuite, la triéthylamine (7 mL) est ajoutée goutte à goutte, ce qui conduit à un trouble de la solution de couleur marron. Le mélange est alors laissé sous agitation pendant 24 h. Les lames sont ensuite lavées à l'eau et l'éthanol puis séchées sous azote. Le greffage effectif du DMABC est prouvé par mesures d'angles de contact ($\theta_{DOPA}$ supérieur à 10° et $\theta_{DOPA+DMABC}$ environ 60°),

et d'XPS.

### I.4. Greffage des polyionènes (PI)

La polymérisation des polyionènes (polyaddition) a été réalisée dans une solution de méthanol à 65°C pendant 16 h, directement à partir des surfaces (PE ou verre) greffées de PDMA, placées horizontalement sur la grille. Les deux monomères (dibrome et diamine) ont ensuite été rajoutés à la solution à une concentration de 0,9 M. Cinq surfaces de polyionènes différentes ont été préparées : le polyionène 3,3 (PI 3,3) en utilisant la N,N,N',N'-tétraméthyl-1-3 propane diamine et le 1,3-dibromopropane; le polyionène 6,6 (PI 6,6) en utilisant la N,N,N',N'-tétraméthyl-1,6 hexanediamine et le 1,6-dibromohexane; le polyionène 6,Ph (PI 6,Ph) en utilisant la N,N,N',N'-tétraméthyl-1,6 hexanediamine et le α,α'-dibromométhyl-*p*-xylène; le polyionène 6,9 (PI 6,9) en utilisant la N,N,N',N'-tétraméthyl-1,6 hexanediamine et le 1,9 dibromononane, et, le polyionène 6,12 (PI 6,12) en utilisant la N,N,N',N'-tétraméthyl-1,6 hexanediamine et le 1,12-dibromododecane. Après la réaction, les échantillons sont ensuite rincés plusieurs fois avec de l'eau désionisée et de l'éthanol puis séchés sous azote. Des conditions similaires ont été effectuées sur les films de polydopamine post-fonctionnalisée.

### I.5. Caractérisation des surfaces

A chaque étape réactionnelle, la surface a été caractérisée par FTIR, XPS, profilomètre, mesures d'angles de contact et des caractéristiques énergétiques de surface, la lame de verre non traitée ou le film de PE initial servant de référence.

Les spectres infrarouges ont été obtenus avec un Bruker Vertex 70 et un détecteur DTGS à température ambiante.

Les mesures XPS ont été obtenues à partir d'un spectromètre Kratos Axis Ultra DLD avec une excitation Al K monochromatique (1486,7 eV) à 150 W et un système de compensation de charges. Les données photoélectroniques ont été collectées à un angle de sortie de 90°. Les spectres de l'étude ont été prélevés à une énergie de passage de l'analyseur de 160 eV et les spectres à haute résolution à une énergie de passage de 40 eV. L'échelle d'énergie de liaison a été calibrée sur la ligne C 1s à 284,7 eV.

Les mesures des angles de contact ont été évaluées avec un appareil APOLLO, AC01 OCA Data Physics à température ambiante. Les valeurs moyennes ont été obtenues à partir de cinq mesures effectuées sur différents points de la lame. Les épaisseurs des films ont été déterminées en utilisant un profilomètre Dektak 30ST avec une résolution verticale de 3 nm.

Les caractéristiques énergétiques des surfaces ont été déterminées en mesurant les angles de contact (θ) avec la méthode proposée par Young-van Oss *et al.* Dans cette approche, les angles de contact (θ) du liquide pur (L) peuvent être exprimés comme suit **[19]** :

$$\cos\theta = -1 + \frac{2(\gamma_S^{LW} + \gamma_L^{LW})^{\frac{1}{2}}}{\gamma_{LV}} + \frac{2(\gamma_S^{+}\gamma_L^{-})^{\frac{1}{2}}}{\gamma_{LV}} + \frac{2(\gamma_S^{-}\gamma_L^{+})^{\frac{1}{2}}}{\gamma_{LV}} \quad (1)$$

dans laquelle $\gamma^{LW}$ désigne la composante de Lifshitz-van der Waals de l'énergie libre de surface, $\gamma^+$ la composante acceptant les électrons et $\gamma^-$ la composante donneur d'électrons de l'énergie libre de surface. La propriété acide-base de Lewis ($\gamma^{AB}$ ) et l'énergie libre totale de surface (γ) ont été définies respectivement par:

$$\gamma^{AB} = 2(\gamma^+\gamma^-)^{\frac{1}{2}} \quad (2)$$

$$\gamma = \gamma^{LW} + \gamma^{AB} \quad (3)$$

Trois liquides ayant des caractéristiques énergétiques connues ont été utilisés : l'eau (Millipore, France), le formamide, le di-iodométhane et/ou le bromonaphtalène. Pour chaque solvant et chaque échantillon, au moins 10 mesures ont été prises sur chaque surface.

### I.6. Ionènes en solution.

Les polyionènes ont été synthétisés selon la procédure décrite dans **[20].** La caractérisation des masses

molaires a été réalisée par RMN $^1H$ et par chromatographie d'exclusion aqueuse (SEC), avec 2 colonnes PolarGel-M (300 × 7,5 mm) de Varian et l'éluant contenant 54% en volume d'une solution à 0,54 M d'acétate de sodium, 23% en volume de méthanol, 23% en volume d'acide acétique glacial, avec un pH global de 4. La détection a été effectuée *via* un système 390-LC (DRI + viscosimètre + détecteur de diffusion de la lumière à double angle 15/90) avec des standards de polyéthylène glycol/oxyde EasiVial, de polydispersité étroite, pour l'étalonnage.

### I.7. Matériel microbien

Deux souches de *Lactococcus lactis* (une souche hydrophile (505) et une souche hydrophobe (507)), *Staphylococcus aureus (S. aureus)* et *Escherichia coli (E. coli)* ont été respectivement cultivées en milieu M17 (*Becton Dickinson),* en milieu TSB (*Trypcase Soja Broth*) et en milieu LB (*Luria Bertani*). Les souches ont été cultivées avec trois batchs de culture consécutifs à 30°C pour *L. lactis* et à 37°C pour *S. aureus* et *E. coli.* Les expériences ont été réalisées en utilisant des cultures en phase stationnaire avec une densité optique à 620 nm ($DO_{620nm}$) de 0,8 (environ $10^9$ unités formant colonies par ml ($UFC.mL^{-1}$)).

### I.8. Concentration minimale inhibitrice (CMI)

La CMI a été estimée à partir des courbes de croissance de la turbidité « turbidity growth curves » générées par un spectrophotomètre automatique (Bioscreen C™, Labsystem France SA). La CMI signifie la plus faible concentration du composé qui inhibe complètement la croissance. Toutes les souches disponibles ont été testées en présence des différents polyionènes. L'appareil Bioscreen C™ possède un incubateur microbiologique et un dispositif de suivi de la croissance des cultures permettant l'analyse simultanée de 200 échantillons répartis dans deux microplaques de 10 x 10 puits. En mesurant la turbidité de la suspension bactérienne au fil du temps, la croissance bactérienne peut être obtenue à partir de la courbe de densité optique (DO). Dans le cas présent, les mesures ont été effectuées à une longueur d'onde de 600 nm. Chaque puits de la plaque Bioscreen a été inoculé avec 270 μl de suspension bactérienne dans du milieu M17 ou TSB à $10^6$ $UFC.mL^{-1}$ (cette concentration a été vérifiée par dénombrement sur milieu gélosé) et 30 μl de la solution de polymère. Ensuite, les puits ont été soigneusement mélangés et la plaque entière a été passée dans le Bioscreen pendant 72 h à 30°C ou 37°C selon les bactéries testées. Bioscreen a été programmé pour mesurer la DO de chaque puits toutes les 15 min, en agitant la plaque avec une intensité moyenne pendant 30 s avant les mesures.

### I.9. Etudes d'adhésion bactérienne

Les tests d'adhésion bactérienne ont été réalisés par sédimentation à l'aide des deux souches pathogènes: *Staphylococcus aureus* et *Escherichia coli.*

Les cellules en phase stationnaire de croissance ont été récoltées et lavées trois fois par centrifugation à 7000 g pendant 10 min à 4°C et mises à nouveau en suspension dans de l'eau distillée stérile. Les cellules ont été ajustées à $DO_{620nm} \approx 0,8$ et la concentration a été vérifiée par dénombrement des cellules viables cultivables sur des plaques TS Agar. On a laissé 10 ml de la suspension cellulaire adhérer pendant 3 h à 37°C à des échantillons de substrat dans des boîtes de Pétri de 55 mm. Après 3 h, les cellules non adhérentes ou faiblement liées ont été éliminées par 6 rinçages successifs d'échantillons de substrat dans de l'eau désionisée. Les cellules adhérentes ont été détachées par traitement aux ultrasons (Branson Ultrasonics 1510, USA) pendant 2 min à température ambiante et sous agitation vigoureuse pendant 30 s à température ambiante. Le nombre de bactéries viables et cultivables a été déterminé par dénombrement des cellules cultivables sur des plaques TS Agar. Chaque expérience a été répétée trois fois. L'analyse de variance ANOVA a été réalisée en utilisant Statgraphics (Manugistic Inc., Rockville, MD, USA). Le pourcentage d'inhibition de la croissance des bactéries sur les surfaces fluorées en ce qui concerne la surface du verre nu à titre de référence a été calculé avec la formule suivante:

$$\% \text{ Inhibition}_{\text{échantillon}} = (1-(\text{UFC}_{\text{échantillon}}/\text{UFC}_{\text{référence}})) \times 100$$

avec « échantillon » correspondant aux surfaces greffées en polyionène et « référence » correspondant aux lames de verre ou surfaces de PE. Par ailleurs, dans la formule ci-dessus, on entend par « UFC », des Unités Formant Colonies par unité de surface exprimée en $cm^2$.

Pour les observations de la flore totale, le substrat contaminé a été placé entre deux lames et observé avec un microscope Leica DMLB. En ce qui concerne *S. aureus,* la microscopie à épifluorescence a été réalisée directement en utilisant une souche fluorescente.

Pour les tests d'adhésion concernant *E. coli,* la méthode de coloration utilisant le kit LIVE/DEAD® BacLight™ a été utilisée. Ce test de coloration permet de distinguer directement la flore totale et inhibée. Il repose sur deux sondes

fluorescentes: syto 9 sensible à la flore totale en pénétrant à la fois dans les membranes des cellules vivantes et mortes et l'iodure de propidium sélectif des membranes de cellules mortes. La microscopie à épifluorescence a été utilisée à nouveau pour estimer l'adhésion des bactéries et pour calculer le pourcentage de viabilité.

## II. Résultats et Discussion

### II.1. Études physiques et biologiques des ionènes en solution (non greffés)

Les propriétés bactériostatiques particulièrement efficaces des polyionènes (PI) ont déjà été démontrées récemment **[7],** mais aucune étude systématique n'a été réalisée sur les PI aliphatiques ayant une longueur de chaîne différente. De plus, les souches d'intérêt choisies ici devaient également être étudiées ici en solution (mesures de CMI « concentrations minimum d'inhibition ») avant d'être utilisées dans des études d'adhésion sur des surfaces greffées avec des PI.

À cet effet, plusieurs polymères ayant un rapport hydrophobicité/charge différent ont été synthétisés. Une étude similaire a été réalisée avec d'autres polymères (polycarbonates) **[21].** Comme indiqué précédemment, la synthèse des ionènes est basée sur un procédé de polyaddition (réaction de Menschutkin) conduisant à un bon contrôle du rapport hydrophobicité/charge, de la densité de charge et de la longueur des chaînes. En général, la synthèse implique la réaction de N,N,N',N'-tétraméthyldiamines et $\alpha,\omega$-dibromoalcanes dans l'eau ou un solvant polaire **[20].** La nomenclature typique des ionènes d'ammonium aliphatiques est x,y-ionène où x représente le nombre d'unités méthylènes dérivées du monomère diamine tertiaire et y représente les unités méthylènes dans le monomère dihalogénoalcane. La structure est principalement caractérisée par RMN-$^1$H à partir de laquelle on peut également calculer la masse molaire (Mn) en fonction du rapport des intégrations des signaux des bouts de chaînes et de ceux dus aux motifs répétitifs de la chaîne polymère (Tableau 1). Une chromatographie d'exclusion stérique aqueuse (SEC) a également été utilisée et l'analyse a donné un Mn variant de 2 500 à 12 000 g.mol$^{-1}$ avec une polydispersité de 1,3 à 3 (voir Tableau 1).

Pour déterminer les propriétés bactériostatiques des polyionènes, des mesures de concentration minimale inhibitrice (CMI) ont été effectuées. La CMI est la concentration la plus faible d'un matériau antimicrobien capable d'inhiber la croissance visible d'un microorganisme. Ici, elle caractérise l'effet bactériostatique des polyionènes. Des tests ont été effectués sur *Saccharomyces aureus* dans un premier temps et des mesures complémentaires ont également été effectuées sur deux souches de *Lactococcus lactis* (Gram +) ainsi que sur une souche de *Escherichia coli* (Gram -). Tous les résultats ont été rapportés dans le Tableau 1 ci-après. Les résultats de CMI sont exprimés en $\mu$g/ml et le poly(chlorure de (2-méthacryloyloxy)éthyltriméthyl-ammonium) (PMTAC) est utilisé à titre de comparaison car c'est un polymère cationique qui est couramment utilisé pour des applications antibactériennes **[22, 23].**

Tableau 1

| Polyionène | $M_n$ (g.mol$^{-1}$) (PDI) | CMI ($\mu$g/mL) *L. lactis 505* | CMI ($\mu$g/mL) *L. lactis 507* | CMI ($\mu$g/mL) *S. aureus* | CMI ($\mu$g/mL) *E. coli* |
|---|---|---|---|---|---|
| PI 3,3 | 6000 (2.4) | 75 | 60 | 15 | 50 |
| PI 6,6-1 | 11200 (1.3) | 25 | 27 | 7.5 | 7,5 |
| PI 6,6-2 | 10800 (1.6) | 25 | 27 | 7.5 | 7,5 |
| PI 6,Ph | 9500 (3) | 15 | 15 | 15 | / |
| PI 6,9-1 | 12000(1.6) | 15 | 3,75 | 15 | / |
| PI 6,9-2 | 5200 (1.7) | 15 | 3,75 | 7,5 | 3,75 |
| PI 6,12 | 2900 (1.3) | 1 | 1 | 2 | 1 |
| PMTAC | 8100 (1.2) | >200 | >200 | >200 | >200 |

Tout d'abord, on peut noter que les CMI des ionènes sont particulièrement faibles, mais ces valeurs sont d'autant plus faibles que la longueur des segments hydrophobes augmente. Cette tendance est observée pour toutes les souches étudiées. En ce qui concerne la nature des souches, on peut mettre en évidence que les effets bactériostatiques de PI 3,3 et PI 6,6 sur *S. aureus* sont plus marqués que sur les deux souches de *L. lactis.* Lorsque les segments hydrophobes sont plus gros, les propriétés antimicrobiennes sont plus importantes vis-à-vis de *S. aureus* que de *L. lactis.* Seul l'intermédiaire PI 6,Ph contenant des groupes phényle à l'intérieur des segments ne présente aucune variation de CMI sur les deux souches. Il convient de noter que généralement, les valeurs de CMI sont très similaires pour les deux souches lactiques (hydrophiles et hydrophobes). Pour *E. coli,* la même tendance est observée, i. e. les valeurs de CMI pour PI 6,6 (7,5 $\mu$g/mL) sont plus faibles que pour PI 3,3 (50 $\mu$g/mL). Ces données permettent de fonder l'hypothèse d'un effet plus marqué des PI pour les flores indésirables (*S. aureus* et *E. coli*) que pour les flores d'intérêt technologique.

Ainsi, aux CMI des flores indésirables, une préservation des souches positives (lactiques) est possible. Ceci peut avoir un intérêt notable notamment dans l'application des films alimentaires de produits carnés.

L'autre point à souligner est la grande différence entre les valeurs de CMI entre les polyionènes et d'autres polymères cationiques tels que le PMTAC obtenu par polymérisation radicalaire contrôlée (polymérisation par transfert d'atome, ATRP). Ce dernier contient des groupes cationiques pendants (ammonium quaternaire) et a déjà été largement mentionné comme polymère antimicrobien **[22].** Les inventeurs ont clairement mesuré que la CMI de ce polymère est beaucoup plus élevée que celle de PI (>_ 200 μg/mL). La principale différence entre le PMTAC et les ionènes repose sur la structure. Les deux contiennent une charge positive (ammonium quaternaire) dans les unités répétitives, mais dans le cas des ionènes, cette charge positive est combinée à des segments de groupes méthylènes hydrophobes plus ou moins longs. L'autre particularité de ces polymères cationiques est la position de l'ammonium quaternaire à l'intérieur du squelette de la chaîne, conférant une meilleure stabilité des charges, par rapport aux groupes chargés pendants (PMTAC) **[20].**

**II.2. Greffage de surface des ionènes**

La procédure chimique de greffage sur des lames de verre est schématisée à la Figure 1 (le même protocole est utilisé sur les films de PE, seule la première étape d'activation diffère : il s'agit d'un traitement corona/plasma). La stratégie de greffage des polyionènes a été envisagée par la préparation d'une sous-couche de poly(diméthylamino méthacrylate) dans lesquels des groupes diméthylamino peuvent être utilisés avantageusement pour effectuer la polyaddition des ionènes. Cette polymérisation a été réalisée par le procédé Graftfast™ **[14,15],** une polymérisation de surface induite par les sels de diazonium. Pour que les surfaces traitées le soient de façon plus homogène, une sous-couche plus réactive à base de revêtement de polydopamine (PDA) a été utilisée. L'utilisation de ce matériau de revêtement bio-inspiré comme primaire d'adhésion a émergé, ces dernières années, grâce aux travaux pionniers de Messersmith *et al* **[10].** Les mécanismes de réaction ont été étudiés et rapportés comme impliquant la formation de bases de Schiff, des additions de Michael et/ou des agrégats supramoléculaires de monomères qui sont maintenus ensemble par une combinaison d'interactions de transfert de charge, d'empilement aromatique (π-stacking) et/ou de liaison hydrogène **[9-12, 24].**

Comme le montre le schéma de la Figure 1, avant le revêtement de polydopamine (PDOPA), les surfaces de verre ont été activées par immersion dans une solution piranha pour générer une couche riche en hydroxyle. Pour les films de PE, cette activation est effectuée *via* un traitement plasma dont les conditions (gaz, durée...) ont été optimisées. Ensuite, une auto-polymérisation du PDOPA a été effectuée à pH 11, comme décrit précédemment dans la littérature **[25].** La solution de PDA a été laissée à réagir pendant 1 à 48 h conduisant à un film de PDOPA adhérent, déposé sur des plaques de verre ou des films de PE.

La stratégie employée ensuite repose sur une polymérisation de surface du (diméthylaminoéthyl)méthacrylate (DMA) par réduction des sels de diazonium et nommée Graftfast™ (Figure 1). Ce procédé consiste en une simple activation redox des sels d'aryle de diazonium (agents oxydants forts) avec un agent réducteur tel que l'acide L-ascorbique. Cela conduit à la formation d'une couche de type polynitrophénylène greffé (PNP) lorsque aucun monomère vinylique n'est présent ou à des films polymères greffés minces issus de la réaction avec des monomères. Pour ce dernier, l'amorçage de la polymérisation est induit par des radicaux aryles, et les chaînes polymères en croissance ainsi formées peuvent alors réagir sur la sous-couche de PDOPA par couplage radicalaire ou par absorption d'hydrogène **[14,15].** La concentration optimale de monomère (DMA) a été déterminée pour aboutir au nombre maximum de chaînes en croissance et à une épaisseur de film optimum. Toutes les caractérisations de cette couche (FTIR, XPS et angles de contact) seront discutées ultérieurement et comparées aux autres dans le film nanostructuré.

En variante, les fonctions diméthylamino peuvent être introduites *via* la post-fonctionnalisation du PDOPA selon les modalités décrites au point I.3.ii ci-dessus.

A partir de cette couche de poly(diméthylaminoéthyl méthacrylate) (PDMA), la polymérisation directe des ionènes a été réalisée avec succès. La polymérisation en surface des ionènes a été effectuée dans du méthanol à 60°C pendant une nuit La concentration en monomère et le pourcentage de solvant ont été optimisés sur la base des données cinétiques en solution et des expériences de polymérisation en surface. La concentration en monomères (diamine et dibrome) a été fixée à 0,9 M, l'épaisseur de film correspondante pour cette concentration étant maximale. La polymérisation en surface a été effectuée en utilisant la même combinaison de dibrome et de diamine que celle décrite précédemment en solution, conduisant au greffage de PI 3,3, PI 6,6, PI 6,9 et PI 6,12. Après la réaction, les plaques de verre fonctionnalisées (ou d'autres substrats tels que des films de PE) ont été rincées avec de l'eau désionisée puis de l'éthanol avant d'être séchées sous azote. Comme pour les autres étapes de réaction, la caractérisation a été réalisée *via* FTIR, mesure d'angles de contact et XPS.

Tout d'abord, la masse molaire (Mn) des ionènes greffés a été déterminée *via* l'analyse RMN-$^1$H et plus particulièrement la chromatographie d'exclusion stérique couplée à la diffusion de lumière (SEC/MALS) du polymère formé en solution (Tableau 2).

Tableau 2 : Masses molaires des polyionènes synthétisés en solution, déterminées par RMN ou chromatographie d'exclusion stérique couplée à la diffusion de lumière (SEC/MALS)

| Polyionènes greffés | $M_n$ (g.mol$^{-1}$) RMN $^1$H | $M_n$ (g.mol$^{-1}$) SEC/ MALS | Polydispersité (PDI) $M_w/M_n$ |
|---|---|---|---|
| PI 3,3 | 7300 | 3300 | 2.75 |
| PI 6,6 | 4200 | 4300 | 1.8 |
| PI 6,9 | 6100 | 3900 | 1.6 |
| PI 6,12 | 11100 | 7400 | 1.85 |

Les spectres infrarouges des différentes couches ont également été mesurés pour attester de leur greffage efficace (Figure 2). La polydopamine (PDA) a montré une forte bande d'absorption à 3400 cm$^{-1}$, caractéristique des groupes amino. La couche de PDMA est ensuite caractérisée par la présence de la bande ester à 1730 cm$^{-1}$. Les différentes couches d'ionène sont caractérisées à la fois par la bande méthylène à 2900 cm$^{-1}$ et la bande correspondant aux groupes ammonium quaternisés à 3400 cm$^{-1}$. Par l'abaque réalisé avec des films de PDMA, une épaisseur d'environ 8 nm basée sur le pourcentage d'ester a été déterminée avant la polymérisation des ionènes. Après la polymérisation des ionènes, les mesures du profilomètre ont donné une épaisseur de 17,5 nm (PI 6,6). Ces valeurs ont ensuite été confirmées par des mesures XPS.

Pour approfondir la caractérisation des structures, des mesures XPS ont également été effectuées pour les couches séquencées (Tableau 3, Figures 3, 4 et 5). Le Tableau 3 résume les compositions atomiques de surface déduites des données XPS.

Tableau 3: Composition chimique surfacique (% atomique) des surfaces déterminée par XPS, à partir des spectres ensemble avec la concentration % des différentes liaisons de N 1s à partir des spectres de haute résolution.

| Rapport atomique (%) | | | | | | | |
|---|---|---|---|---|---|---|---|
| **Couche** | **N 1s** | **C-N** | **N+** | **$NO_2$** | **C 1s** | **0 1s** | **Si 2p** |
| PDOPA | 7 | / | / | / | 70 | 31 | 3.5 |
| PDMA | 9 | / | / | / | 74 | 16.5 | 0.5 |
| PI 3,3 | 7 | 59 | 36 | 5 | 72 | 17 | 2 |
| PI 6,6 | 7 | 43 | 55 | 2 | 79 | 13 | 1 |
| PI 6,12 | / | 38 | 57 | 5 | / | / | / |
| PI 6,9 | | 40 | 59 | / | / | / | / |

L'étude XPS des surfaces en polydopamine (PDOPA), en poly(diméthylamino) méthacrylate (PDMA) et en ionènes est présentée Figure 3. Pour toutes les couches, les principaux signaux sont dus à la présence d'oxygène, de carbone et d'azote. Pour les couches d'ionènes, on peut également observer la présence de deux signaux de brome (Br3p et Br3d), dus aux contre-ions des ammoniums quaternaires. Via des mesures de haute résolution sur les pics d'azote, respectivement réalisées sur des surfaces en verre (Figure 4) ou en PE (Figure 5), on peut constater que la couche PDOPA et la couche PDMA ne présentent qu'une seule contribution (un seul pic à 400 eV). Après les polymérisations des ionènes, deux pics apparaissent clairement pour le signal N. Il s'agit d'une nouvelle contribution à plus haute énergie de liaison (402 eV) correspondant aux groupes ammonium ($N^+$). Ce pic représente alors la signature de la présence d'ionènes sur les surfaces de verre ou de PE pré-traitées.

**II.3. Caractérisation énergétique des surfaces en ionènes**

Des mesures d'angles de contact avec de l'eau ont d'abord été effectuées. Les valeurs obtenues à partir des surfaces de polyionène sont inférieures à celles de la sous-couche PDMA, ce qui s'explique simplement par le fait que la couche de polyionène est chargée contrairement à celle de PDMA. De façon plus surprenante, les valeurs des angles de contact avec l'eau ont tendance à diminuer avec la présence dans les ionènes, de fragments hydrophobes plus longs.

Le Tableau 4 ci-après présente les mesures d'angles de contact à l'eau sur des surfaces en PE ou en verre activées (Pré-Traitement), revêtues de polydopamine (Polydopamine) puis soumises à soit un greffage radicalaire de PDMA (Film PDMA), soit une post-fonctionnalisation de la polydopamine (Greffage de DMABC) avant greffage de polyionène (Greffage PI 3,3). On peut ainsi noter une variation significative des valeurs d'angles de contact lors des

différentes étapes pour ces deux voies supplémentaires. Ceci atteste, avec les données XPS, du greffage effectif des ionènes que ce soit sur le PE *via* la voie PDMA ou sur le verre *via* la post-fonctionnalisation de la PDOPA.

Tableau 4 : Valeurs d'angles de contact (à l'eau) des différentes étapes pour le greffage sur le PE *via* le PDMA ou sur le verre *via* la PDOPA fonctionnalisée

| | Polyéthylène (PE) Angle de contact avec eau (°) | Verre Angle de contact avec eau (°) |
|---|---|---|
| Surface native | 84±5 | 26±5 |
| Pré-Traitement | 67±2 | 12±3 |
| Polydopamine | < 10 | < 10 |
| Film PDMA | 62±3 | / |
| Greffage de DMABC | / | 61±2 |
| Greffage PI 3,3 | 50±3 | 52±5 |

Cependant, les valeurs d'angles de contact avec l'eau ne sont pas suffisantes pour conclure sur les propriétés énergétiques de la surface.

Par conséquent, pour mieux comprendre les propriétés de mouillage des surfaces, les caractéristiques énergétiques ont été déterminées, pour des surfaces de verre greffées avec des PI conformément au procédé selon l'invention, à l'aide de liquides sondes polaires et apolaires. A partir de l'équation de Young-van Oss, il est possible de calculer respectivement la composante $\gamma^{LW}$ de Lifshitz-van der Waals (non polaire), le paramètre acide de Lewis $\gamma^+$ et le paramètre base de Lewis $\gamma$ (Tableau 5).

Tableau 5: Valeurs calculées d'énergie de surfaces solides ($mJ.m^{-2}$)

| | Parameters ($mJ.m^{-2}$) | | | | | | | |
|---|---|---|---|---|---|---|---|---|
| | $\gamma^{LW}$ | $\gamma^-$ | $\gamma^+$ | $\gamma^{AB}$ | $\gamma^S$ | $\Delta G_{AB}$ | $\Delta G_{LW}$ | $\Delta G$ |
| Glass surface with | | | | | | | | |
| PI 3-3 | 37.5 ±1.2 | 17.9 ±7.8 | 2.1 ±1.2 | 12.2 ±5.1 | 49.9 ±5.2 | -57.3 ±11.5 | -57.3 ±0.9 | -114.7 ±11.5 |
| PI 6-6 | 42.7 ±1.5 | 35.1 ±4.7 | 1.5 ±0.4 | 14.3 ±2.7 | 57.0 ±3.1 | -72.0 ±5.3 | -61.0 ±1.1 | -133.0 ±5.4 |
| PI 6-9 | 45.1 ±1.4 | 32.9 ±3.7 | 1.1 ±0.3 | 12.1 ±2.2 | 57.1 ±2.6 | -68.6 ±4.4 | -62.7 ±1.0 | -131.3 ±4.5 |
| PI 6-12 | 41.5 ±0.3 | 45.8 ±3.3 | 1.4 ±0.2 | 15.7 ±1.6 | 57.3 ±1.7 | -80.1 ±3.3 | -60.2 ±0.3 | -140.3 ±3.3 |

** La composante énergie libre de surface ($mJ.m^{-2}$) $\gamma^{LW}$ avec le paramètre donneur d'éléctrons $\gamma$, le paramètre accepteur d'éléctrons $\gamma^+$, et le paramètre acide-base $\gamma^{AB}$ ont été mesurés. Les déviations standard (±) ont été déterminées sur la base d'au moins 5 mesures séparées.*

Ces derniers paramètres sont relativement faibles pour $\gamma^+$ et élevés pour $y^-$, ce qui signifie que les surfaces en ionènes conservent un caractère basique plus fort avec l'augmentation de la taille des segments hydrophobes. $\gamma^+$ est plus important pour PI 3,3, ce qui signifie que plus de charges positives sont présentes, car exposées à l'extérieur (contact eau-surface) tandis que la forte augmentation de $\gamma^-$ pour PI 6,12 est probablement due à une augmentation locale de la concentration en contre-ions. Les calculs d'énergie d'hydratation mettent en avant une plus grande hydrophilie des PI ayant des segments hydrophobes plus longs, laissant supposer une plus grande flexibilité des chaînes dans ce cas.

**II.4. Impact des surfaces sur l'adhésion des souches indésirables.**

Les résultats obtenus à partir des tests de microbiologie sur *S. aureus* et *E. coli* démontrent les propriétés bactériostatiques des surfaces greffées avec des ionènes. Pour *S. aureus,* l'adhésion bactérienne a été évaluée en termes de dénombrement des bactéries adhérentes (cellules totales et cellules viables cultivables) et de distribution/localisation des bactéries (hétérogénéité). La Figure 6a présente les résultats obtenus à partir des tests de cellules viables/cultivables. Il est clair que les surfaces traitées avec des polyionènes entraînent une diminution de plus de 1 à 2 log UFC/cm$^2$ par rapport à la surface native, ce qui correspond à une réduction de 73,5 à 97,5% des bactéries (voir Figure 6b).

De plus, l'effet bactériostatique effectif de ces surfaces traitées est également attesté par la caractérisation de l'adhésion suivie par microscopie à épifluorescence. On peut observer que la surface du verre greffé avec des ionènes est totalement recouverte de bactéries, tandis que la surface initiale (verre vierge) présente une adhésion plus faible. Ces résultats montrent clairement que les films d'ionènes conduisent à des surfaces à la fois pro-adhésives et biocides, i.e. fortement bactériostatiques.

Par rapport à cet effet très pro-adhésif par rapport à la référence, il est apparu important de revoir les déterminations des viables/cultivables aussi par rapport à la flore totale de chaque surface de ionène, *i.e.* de normaliser les pourcentages d'inhibition par rapport au nombre de bactéries initialement adhérées sur le substrat modifié. Dans la Figure 7, on parle donc préférentiellement de pourcentage d'efficacité pour se différencier du cas précédent (Figure 6b).

On note que les surfaces modifiées sont alors efficaces de 94 à 99,5 % par rapport aux bactéries effectivement piégées initialement. On vérifie bien alors le pouvoir biocide par rapport aux propriétés pro-adhésives de ces surfaces.

Des résultats comparables ont été obtenus en utilisant un film de PE greffé avec des ionènes. Ainsi, le Tableau 6 ci-après présente l'énumération de la flore totale de *S. aureus* par microscopie à épifluorescence et des cellules viables/cultivables de *S. aureus* sur une surface en PE natif i.e. non traité et sur des surfaces en PE greffé de ionènes du type PI 3,3 ou PI 6,6.

Tableau 6

| | PE natif | PE modifié avec du PI 3,3 | PE modifié avec du PI 6,6 |
|---|---|---|---|
| Flore totale (bactéries/cm$^2$) | 3,61E+03 | 2,27E+05 | 1,68E+05 |
| Viable cultivable (UFC/cm$^2$) | 2,09E+02 | 3,93E+04 | 6,11E+03 |

A partir des résultats présentés dans le Tableau 6, on obtient des pourcentages d'efficacité vis-à-vis de *S. aureus* de 82,7% pour les surfaces de PE greffé de ionènes du type PI 3,3 et de 96,4% pour les surfaces de PE greffé de ionènes du type PI 6,6.

Pour vérifier que les surfaces en polymères ionènes ont été greffées de manière efficace et covalente sur les surfaces, celles-ci ont été mises dans l'eau désionisée pendant 3h à 37°C, et la solution a ensuite été récupérée pour être utilisée dans des essais de bioscreen. Des mesures de CMI ont ensuite été effectuées sur *S. aureus* avec différentes dilutions du surnageant. Ces mesures de CMI ont clairement montré qu'il n'y a pas d'inhibition de la croissance des bactéries (aucun effet bactériostatique), ce qui atteste l'absence de polyionènes dans le surnageant (qui ont pourtant une CMI très faible, jusqu'à 1 $\mu$g/mL), et donc l'absence de relargage. Un exemple est donné pour les substrats modifiés avec du PI 3,3 à la Figure 8, à travers les mesures de densité optique.

On voit en effet que les courbes de croissances de la Figure 8 sont toutes identiques. Aucune décroissance n'est observée par rapport aux courbes témoins. C'est par conséquent une preuve forte du greffage robuste et covalent des ionènes et de l'efficacité des procédures de lavage (eau désionisée/éthanol).

Des comparaisons supplémentaires ont été faites avec du PMTAC (chlorure de poly(2-méthacryloyloxyéthyl)triméthylammonium) greffé contenant des ammoniums quaternaires comme groupes pendants. Comme montré précédemment dans les études en solution (voir mesures de CMI, paragraphe précédent), ce polymère a été aussi greffé afin de comparer ses propriétés bactériostatiques à celles des films de ionènes. Ici, le PMTAC a été polymérisé sur la surface en utilisant le même procédé (polymérisation induite par les sels de diazonium) que celui utilisé pour préparer la sous-couche de PDMA (voir la partie expérimentale).

Dans ce cas, une forte adhésion a également été observée sur le substrat. Cependant, le nombre de colonies de cellules viable/cultivable (dénombrement par UFC) est de l'ordre de 2,9 $\times$ 10$^5$, soit 1,8 log de plus que celui déterminé pour les surfaces de ionènes (PI 6,6) (Figure 9). Cela signifie que l'effet bactériostatique des ionènes est toujours beaucoup plus efficace que le PMTAC après greffage sur la surface (comme observé précédemment dans les tests en solution). Les films de PMTAC sont pro-adhésifs, comme les films de polyionènes, mais ils n'inhibent pas ou très peu la croissance des souches.

Afin de confirmer le large spectre d'action des surfaces fonctionnalisées selon l'invention, des études similaires ont été réalisées sur une souche courante à Gram$^-$: *Escherichia coli.* Cependant, les tests effectués dans ce cas sont différents du fait que la souche disponible n'était pas modifiée fluorescente comme S. *aureus.* Le dénombrement direct n'étant pas possible dans ce cas, un kit de marquage Live/Dead® a été utilisé. En effet, dans ce cas, les bactéries vivantes et mortes ont été directement marquées sur la base de deux sondes fluorescentes. À partir des images obtenues, il est possible de clairement distinguer les bactéries vivantes des bactéries mortes (qui apparaissent en rouge à cause

de l'iodure de propidium qui ne peut traverser que les membranes endommagées). Comme auparavant avec *S. aureus,* une forte adhérence des bactéries a été observée. De toute évidence, un effet bactériostatique beaucoup plus important peut être observé directement pour la surface de PI 6,6 par rapport à la surface PI 3,3. A partir des clichés, les inventeurs ont donc pu estimer le pourcentage de viabilité à partir du ratio bactéries mortes/flore totale. Ainsi, il a été déterminé un pourcentage d'inhibition de 78% pour la surface de PI 3,3 et de plus de 98% pour celle de PI 6,6.

**II.5. Etude du relargage à partir des films de PE greffés de PI.**

Les premiers essais de tests de microbiologie sur les films de PE greffés avec des PI, ont montré que des bactéries issues du surnageant étaient aussi inhibées, ce qui traduisait qu'une partie du PI en surface non greffé, était relargué en solution au moment de ces tests.
Un protocole de lavage des films a donc été mis au point afin d'améliorer son efficacité et résoudre le problème des PI juste adsorbés en surface. En effet, comme le PI est synthétisé en surface par polyaddition en présence des deux monomères, du polymère libre peut être synthétisé en solution et se retrouver adsorbé sur la surface.
Le protocole de lavage a donc été effectué de la manière suivante : des lavages au méthanol de 30 min à 35-40°C sous agitation (MeOH) ont été conduits, suivis ensuite de lavage à l'eau désionisée de 30 min à 35-40°C sous agitation ($H_2O$), afin de débarrasser les films de toute trace de méthanol avant les tests de microbiologie. La séquence de lavages testée est MeOH bain 1 / MeOH bain 2 / $H_2O$ bain 1 / $H_2O$ bain 2 / MeOH bain 3 / MeOH bain 4 / $H_2O$ bain 3 / $H_2O$ bain 4.
Pour vérifier la présence de PI dans les solutions de lavage au méthanol, celles-ci ont été évaporées puis redispersées dans le mélange de la phase mobile (méthanol/eau/acide acétique) de la chromatographie d'exclusion stérique (SEC). En sortie de colonne, il est possible de détecter la présence du PI *via* deux types de détection : le réfractomètre (signal bleu) et la diffusion de lumière (signal rouge). Le refractomètre est généralement plus sensible, surtout lorsqu'il s'agit, comme ici, de polymères de faibles masses molaires (inférieures à 10000 g/mol).
A partir des chromatogrammes des 3 bains de méthanol (Figures 10a, 10b et 10c), il est clair que c'est seulement lors du dernier bain que le signal du réfractomètre est vraiment plat, indiquant l'absence complète de polyionène.
A partir de là, il a été convenu que 3 lavages au méthanol suivi d'un lavage à l'eau désionisée seraient effectués après tout greffage de PI sur les films de PE, préalablement aux tests de microbiologie et de physico-chimie.

**BIBLIOGRAPHIE**

[1] Dhende et al, ACS Appl. Mater. Interfaces 2011, 3, 2830.
[2] Li et al, RSCAdv. 2012, 2, 4031.
[3] Kurt et al, Langmuir 2007, 23, 4719.
[4] Mattheis et al, Macromol. Biosci. 2012, 12, 341.
[5] Lou et al, Acta Biomaterialia 2018, 78, 78-88.
[6] Strassburg et al, Macromol. Biosci. 2015, 15, 1710.
[7] Liu et al, Biomaterials 2017, 127, 36.
[8] Brevet US 4 980 067 publié le 25 décembre 1990.
[9] Liebscher et al, Langmuir 2013, 29, 10539-10548.
[10] Messersmith, Science 2010, 328, 180.
[11] Guardingo et al, Small 2014, 10, 1594-1602.
[12] Kohri et Kawamura, Polymer science : research advances, pratical applications and educational aspects (A. Ménndez-Vilas; A. Solano, Eds), 2016, 159.
[13] Demande internationale WO 2008/049108 publiée le 24 avril 2008.
[14] Demande internationale WO 2012/160120 publiée le 29 novembre 2012.
[15] Demande internationale WO 2008/078052 publiée le 3 juillet 2008.
[16] Demande internationale WO 2005/033378 publiée le 14 avril 2005.
[17] Demande internationale WO 2006/097611 publiée le 21 septembre 2006.
[18] Ryu et al, ACS Appl. Mater. Interfaces 2018, 10, 7523-7540.
[19] Van Oss et al, Chem. Rev. 1988, 88, 927.
[20] Malikova et al, Physical Chemistry Chemical Physics 2012, 14, 12898.
[21] Engler et al, Biomacromolecules 2013, 14, 4331.
[22] Murata et al, Biomaterials 2007, 28, 4870.
[23] Lee et al, Biomacromolecules 2004, 5, 877.
[24] Dreyer et al, Langmuir 2012, 28, 6428.

[25] Neoh et Kang, ACS Appl. Mater. Interfaces 2011, 3, 2808.

**Revendications**

1. Procédé pour conférer des propriétés bactériostatiques ou bactéricides à la surface d'un objet consistant à :

   a) fournir un objet dont la surface présente des groupements comprenant au moins un atome d'oxygène ;
   b) déposer, sur la surface fournie lors de l'étape (a), un revêtement à base de polymères de polydopamine ou d'un de ses dérivés, portant au moins une fonction -Y avec Y représentant un atome d'halogène ou une fonction -N(R11)(R12) avec R11 et R12, identiques ou différents, représentant un atome d'hydrogène, un groupe alkyle éventuellement substitué ou un groupe aryle éventuellement substitué ; et
   c) mettre en contact la surface revêtue obtenue suite à ladite étape (b) avec une solution contenant au moins un dihalogène et au moins une diamine à une température supérieure à la température ambiante, moyennant quoi un revêtement à base de polymères de polyionène est greffé, de façon covalente, sur ladite surface revêtue obtenue suite à ladite étape (b).

2. Procédé selon la revendication 1, **caractérisé en ce que** ledit groupement comprenant au moins un atome d'oxygène est choisi dans le groupe constitué par un groupement carboxylique (-C(=O)OH), un groupement hydroxyle (-OH), un groupement alcoxyle (-OX avec X représentant un groupe alkyle, un groupe acyle ou un groupe aryle), un groupement carbonyle (-C(=O)-), un groupement percarbonique (-C(=O)-O-OH) et un groupement amide (-C(=O)$NH_2$).

3. Procédé selon la revendication 1 ou 2, **caractérisé en ce que** ladite étape (a) consiste à soumettre la surface de l'objet à un traitement oxydant.

4. Procédé selon l'une quelconque des revendications 1 à 3, **caractérisé en ce que** ledit dérivé de polydopamine est obtenu par polymérisation d'un dérivé de dopamine qui répond à la formule (II) suivante :

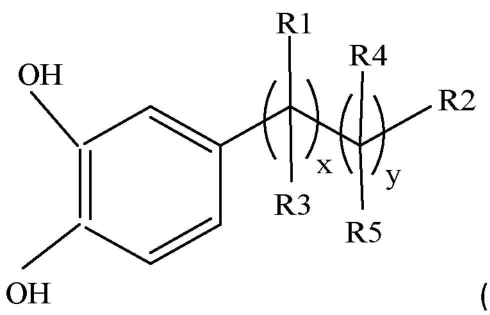

(II)

   - les groupements R1, R2, R3, R4 et R5 sont indépendamment choisis dans le groupe constitué par un hydrogène, un hydroxyle, un halogénure, un thiol, un aldéhyde, un acide carboxylique, un ester carboxylique, un carboxamide, une amine primaire, une amine secondaire, un nitrile, un imidazole, un azide et un dithiocarbamate de polyhexaméthylène ;
   à condition qu'au moins un groupement parmi les groupements R1, R2, R3, R4 et R5 ne soit pas un hydrogène ;
   - x est égal à 0 ou représente un nombre entier compris de 1 à 10, les bornes 1 et 10 étant inclusives ; et
   - y est égal à 0 ou représente un nombre entier compris de 1 à 10, les bornes 1 et 10 étant inclusives ;
   à condition que x ou y soit au moins égal à 1.

5. Procédé selon l'une quelconque des revendications 1 à 4, **caractérisé en ce que** ladite étape (b) comprend au moins une opération, désignée opération d'autopolymérisation oxydative, consistant à mettre en contact, dans des conditions oxydantes, la surface fournie lors de l'étape (a) avec une solution contenant une dopamine, un de ses dérivés ou un de leurs sels, moyennant quoi un revêtement à base de polymères de polydopamine ou d'un de ses dérivés est déposé sur ladite surface.

6. Procédé selon la revendication 5, **caractérisé en ce que** les conditions oxydantes lors de ladite étape (b) consistent à utiliser une solution alcaline contenant une dopamine, un de ses dérivés ou un de leurs sels.

7. Procédé selon la revendication 5 ou 6, **caractérisé en ce que** ladite opération d'autopolymérisation oxydative est suivie d'une opération durant laquelle une molécule portant au moins une ou plusieurs fonction(s) -Y est greffée, de façon covalente, sur le polymère de polydopamine ou de dérivé de polydopamine par post-fonctionnalisation.

8. Procédé selon la revendication 5 ou 6, **caractérisé en ce que** ladite opération d'autopolymérisation oxydative est suivie d'une opération durant laquelle la surface revêtue obtenue suite à l'opération d'autopolymérisation oxydative est mise en contact avec une solution contenant au moins un sel d'aryle diazonium et éventuellement au moins un monomère polymérisable par voie radicalaire différent d'un sel d'aryle diazonium et à soumettre ladite solution à des conditions non électrochimiques, à condition que

   lorsque ladite solution ne contient pas de monomère polymérisable par voie radicalaire, ledit sel d'aryle diazonium présente au moins une fonction -Y,
   lorsque ladite solution contient au moins un sel d'aryle diazonium et au moins un monomère polymérisable par voie radicalaire, ledit sel d'aryle diazonium et/ou ledit monomère polymérisable par voie radicalaire présente au moins une fonction -Y,
   moyennant quoi des entités radicalaires sont formées à partir dudit sel d'aryle diazonium et un revêtement à base de polymères, identiques ou différents, présentant au moins une fonction -Y est greffé, de façon covalente, sur ladite surface revêtue obtenue suite à ladite opération d'autopolymérisation oxydative.

9. Procédé selon la revendication 8, **caractérisé en ce que** lesdites conditions non électrochimiques sont un réducteur organique.

10. Procédé selon l'une quelconque des revendications 1 à 9, **caractérisé en ce que** ladite diamine est de formule (VI) :

   (R13)(R14)N-A-N(R15)(R16) (VI)

   dans laquelle

   - R13, R14, R15 et R16, identiques ou différents, représentent un groupe alkyle éventuellement substitué ou un groupe aryle éventuellement substitué ; et
   - A est une chaîne choisie dans le groupe constitué par une chaîne alkylène éventuellement substituée, une chaîne alcénylène ou alcynylène éventuellement substituée, une chaîne arylène éventuellement substituée, une chaîne alkylarylène éventuellement substituée et une chaîne arylalkylène éventuellement substituée.

11. Procédé selon la revendication 10, **caractérisé en ce que** lesdits radicaux R13, R14, R15 et R16 sont identiques et représentent un méthyle ou un éthyle.

12. Procédé selon l'une quelconque des revendications 1 à 11, **caractérisé en ce que** ledit dihalogène est de formule (VII) :

   (R17)-B-(R18) (VII)

   dans laquelle

   - R17 et R18, identiques ou différents, représentent un halogène ; et
   - B est une chaîne choisie dans le groupe constitué par une chaîne alkylène éventuellement substituée, une chaîne alcénylène ou alcynylène éventuellement substituée, une chaîne arylène éventuellement substituée, une chaîne alkylarylène éventuellement substituée et une chaîne arylalkylène éventuellement substituée.

13. Procédé selon la revendication 12, **caractérisé en ce que** les radicaux R17 et R18 représentent un atome de brome.

14. Procédé selon l'une quelconque des revendications 1 à 13, **caractérisé en ce qu'**au moins une étape de lavage suivie par une étape de rinçage existe entre l'étape (a) et l'étape (b), entre les différentes opérations lors de l'étape (b) et/ou entre l'étape (b) et l'étape (c).

15. Objet présentant une surface à laquelle des propriétés bactériostatiques ou bactéricides ont été conférées conformément à un procédé tel que défini à l'une quelconque des revendications 1 à 14.

**16.** Objet selon la revendication 15, **caractérisé en ce que** ledit objet est choisi dans le groupe constitué par un film tel que, par exemple, un film d'emballage, une boîte, une barquette, un étui, un couvercle, un sachet, du matériel de dialyse, une tige, une sonde, du papier, un textile, une membrane et un filtre.

**17.** Utilisation d'un objet selon la revendication 15 ou 16,

pour emballer et/ou conserver des produits alimentaires comme des produits alimentaires frais ou
pour purifier et/ou décontaminer une solution, un objet ou une surface dans le domaine environnemental ou médico-hospitalier.

**Patentansprüche**

**1.** Verfahren, um der Oberfläche eines Objekts bakteriostatische oder bakterizide Eigenschaften zu verleihen, bestehend aus:

a) Bereitstellen eines Objekts, dessen Oberfläche Gruppen aufweist, die mindestens ein Sauerstoffatom umfassen;
b) Abscheiden auf der im Schritt (a) bereitgestellten Oberfläche einer Beschichtung auf Basis von Polydopamin-Polymeren oder von einem ihrer Derivate, welche mindestens eine -Y-Funktion trägt, wobei Y ein Halogenatom oder eine - N(R11)(R12) Funktion darstellt, wobei R11 und R12, gleich oder verschieden, ein Wasserstoffatom, eine eventuell substituierte Alkyl-Gruppe, oder eine eventuell substituierte Aryl-Gruppe darstellen; und
c) In-Kontakt-Bringen der nach dem Schritt (b) erhaltenen beschichteten Oberfläche mit einer Lösung, die mindestens ein Dihalogen und mindestens ein Diamin enthält, bei einer Temperatur, die höher ist als die Umgebungstemperatur, wodurch eine Beschichtung auf Basis von Polyionen-Polymeren in kovalenter Form auf die nach dem Schritt (b) erhaltene beschichtete Oberfläche verpflanzt wird.

**2.** Verfahren nach Anspruch 1, **dadurch gekennzeichnet, dass** die Gruppierung, die mindestens ein Sauerstoffatom umfasst, aus der Gruppe ausgewählt ist, die aus einer Carboxyl-Gruppe (-C(=O)OH), einer Hydroxyl-Gruppe (-OH), einer Alkoxyl-Gruppe (-OX, wobei X eine Alkyl-Gruppe, eine Akyl-Gruppe oder eine Aryl-Gruppe darstellt), eine Carbonyl-Gruppe Carbonyl-Gruppe (-C(=O)-), eine Percarbon-Gruppe (-C(=O)-O-OH) und einer Amid-Gruppe ($-C-(=O)NH_2$) gebildet ist.

**3.** Verfahren nach Anspruch 1 oder 2, **dadurch gekennzeichnet, dass** der Schritt (a) darin besteht, die Oberfläche des Objekts einer oxidierenden Behandlung zu unterziehen.

**4.** Verfahren nach einem der Ansprüche 1 bis 3, **dadurch gekennzeichnet, dass** das Polydopamin-Derivat durch Polymerisation eines Dopamin-Derivats erhalten wird, das die folgende Formel (II) aufweist:

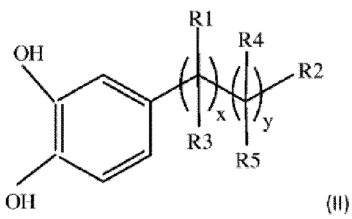

(II)

- wobei die Gruppierungen R1, R2, R3, R4 und R5 unabhängig voneinander aus der Gruppe ausgewählt sind, die durch einen Wasserstoff, ein Hydroxyl, ein Halogenid, ein Thiol, ein Aldehyd, eine Carbonsäure, einen Carboxylester, ein Carboxylamid, ein primäres Amin, ein sekundäres Amin, ein Nitril, ein Imidazol, ein Azid und ein Dithiocarbamat von Polyhexamethylen gebildet ist;
unter der Bedingung, dass mindestens eine Gruppe aus den Gruppen R1, R2, R3, R4 und R5 kein Wasserstoff ist;
- x gleich 0 ist, oder eine ganze Zahl von 1 bis 10 darstellt, wobei die Randwerte 1 und 10 inbegriffen sind; und
- y gleich 0 ist, oder eine ganze Zahl von 1 bis 10 darstellt, wobei die Randwerte 1 und 10 inbegriffen sind;
Unter der Bedingung, dass x oder y mindestens gleich 1 ist.

**5.** Verfahren nach einem der Ansprüche 1 bis 4, **dadurch gekennzeichnet, dass** der Schritt (b) mindestens eine Operation, als oxidative Autopolymerisationsoperation bezeichnet, umfasst, die darin besteht, die im Schritt (a)

bereitgestellte Oberfläche unter oxidierenden Bedingungen mit einer Lösung in Kontakt zu bringen, die ein Dopamin, eines seiner Derivate oder eines ihrer Salze enthält, wodurch eine Beschichtung auf Basis von Polydopamin-Polymeren oder eines seiner Derivate auf der Oberfläche abgeschieden wird.

**6.** Verfahren nach Anspruch 5, **dadurch gekennzeichnet, dass** die oxidierenden Bedingungen beim Schritt (b) darin bestehen, eine alkalische Lösung zu verwenden, die ein Dopamin, eines seiner Derivate oder eines ihrer Salze enthält.

**7.** Verfahren nach Anspruch 5 oder 6, **dadurch gekennzeichnet, dass** auf die Operation der oxidativen Autopolymerisation eine Operation folgt, bei der ein Molekül, das mindestens eine oder mehrere -Y-Funktion(en) trägt, in kovalenter Form durch Post-Funktionalisierung auf das Polydopamin- oder Polydopamin-Derivat-Polymer verpflanzt wird.

**8.** Verfahren nach Anspruch 5 oder 6, **dadurch gekennzeichnet, dass** auf die Operation der oxidativen Autopolymerisation eine Operation folgt, bei der die nach der Operation der oxidativen Autopolymerisation erhaltene beschichtete Oberfläche in Kontakt mit einer Lösung gebracht wird, die mindestens ein Aryldiazoniumsalz und eventuell mindestens ein radikalisch polymerisierbares Monomer, das sich von einem Aryldiazoniumsalz unterscheidet, enthält, und die Lösung nicht elektrochemischen Bedingungen zu unterziehen, unter der Bedingung dass

wenn die Lösung kein radikalisch polymerisierbares Monomer enthält, das Aryldiazoniumsalz mindestens eine -Y-Funktion aufweist,
wenn die Lösung mindestens ein Aryldiazoniumsalz und mindestens ein radikalisch polymerisierbares Monomer enthält das Aryldiazoniumsalz und/oder das radikalisch polymerisierbare Monomer mindestens eine -Y-Funktion aufweist,
wodurch radikalische Einheiten aus dem Aryldiazoniumsalz gebildet werden und eine Beschichtung auf Basis von gleichen oder verschiedenen Polymeren, die mindestens eine -Y-Funktion aufweisen, in kovalenter Form auf die nach der Operation der oxidativen Autopolymerisation erhaltenen beschichteten Oberfläche verpflanzt wird.

**9.** Verfahren nach Anspruch 8, **dadurch gekennzeichnet, dass** die nicht elektrochemischen Bedingungen ein organisches Reduktionsmittel sind.

**10.** Verfahren nach einem der Ansprüche 1 bis 9, **dadurch gekennzeichnet, dass** das Diamin die Formel (VI) aufweist:

(R13)(R14)N-A-N(R15)(R16) (VI)

bei der

- R13, R14, R15 und R16, gleich oder verschieden, eine eventuell substituierte Alkyl-Gruppe oder eine eventuell substituierte Aryl-Gruppe darstellen; und
- A eine Kette ist, ausgewählt aus der Gruppe, die durch eine eventuell substituierte Alkylen-Kette, eine eventuell substituierte Alcenylen- oder Alcynylen-Kette, eine eventuell substituierte Arylen-Kette, eine eventuell substituierte Alkylarylen-Kette und eine eventuell substituierte Arylalkylen-Kette gebildet ist.

**11.** Verfahren nach Anspruch 10, **dadurch gekennzeichnet, dass** die Radikale R13, R14, R15 und R16 identisch sind und ein Methyl oder ein Ethyl darstellen.

**12.** Verfahren nach einem der Ansprüche 1 bis 11, **dadurch gekennzeichnet, dass** das Halogen die Formel (VII) aufweist:

(R17)-B-(R18) (VII)

bei der

- R17 und R18, gleich oder verschieden, ein Halogen darstellen; und
- B eine Kette ist, die aus der Gruppe ausgewählt ist, die durch eine eventuell substituierte Alkylen-Kette, eine eventuell substituierte Alcenylen- oder Alcynylen-Kette, eine eventuell substituierte Arylen-Kette, eine eventuell substituierte Alkylarylen-Kette und eine eventuell substituierte Arylalkylen-Kette gebildet ist.

**13.** Verfahren nach Anspruch 12, **dadurch gekennzeichnet, dass** die Radikale R17 und R18 ein Bromatom darstellen.

**14.** Verfahren nach einem der Ansprüche 1 bis 13, **dadurch gekennzeichnet, dass** mindestens ein Waschschritt, gefolgt von einem Spülschritt zwischen dem Schritt (a) und dem Schritt (b), zwischen den verschiedenen Operationen beim Schritt (b) und/oder zwischen dem Schritt (b) und dem Schritt (c) besteht.

**15.** Objekt, das eine Oberfläche aufweist, welcher bakteriostatische oder bakterizide Eigenschaften gemäß einem Verfahren nach einem der Ansprüche 1 bis 14 verliehen worden sind.

**16.** Objekt nach Anspruch 15, **dadurch gekennzeichnet, dass** das Objekt aus der Gruppe ausgewählt ist, die durch einen Film, wie beispielsweise einen Verpackungsfilm, eine Kiste, eine Schale, ein Etui, einen Deckel, eine Tüte, ein Dialysematerial, einen Stift, eine Sonde, Papier, Textil, eine Membran und einen Filter gebildet wird.

**17.** Verwendung eines Objekts nach Anspruch 15 oder 16,

zum Einpacken und/oder Konservieren von Lebensmittelprodukten, wie frischen Lebensmittelprodukten oder zum Reinigen und/oder Dekontaminieren einer Lösung, eines Objekts oder einer Oberfläche im Umwelt- oder Kranken-und Pflegebereich.

## Claims

**1.** Method for imparting bacteriostatic or bactericidal properties to the surface of an object consisting of:

a) providing an object, the surface of which bears groups comprising at least one oxygen atom;
b) depositing, on the surface provided in step (a), a coating based on polymers of polydopamine or of a derivative thereof, carrying at least one -Y function, with Y representing a halogen atom or an -N(R11)(R12) function with R11 and R12, being identical or different, representing a hydrogen atom, an optionally substituted alkyl group, or an optionally substituted aryl group; and
c) contacting the coated surface obtained following said step (b) with a solution containing at least one dihalogen and at least one diamine at a temperature higher than ambient temperature, whereby a coating based on polyionene polymers is grafted, covalently, onto said coated surface obtained following said step (b).

**2.** Method according to claim 1, **characterised in that** said group comprising at least one oxygen atom is selected from the group consisting of a carboxylic group (-C(=O)OH), a hydroxyl group (-OH), an alkoxyl group (-OX with X representing an alkyl group, an acyl group or an aryl group), a carbonyl group (-C(=O)-), a percarbonic group (-C(=O)-O-OH) and an amide group (-C(=O)$NH_2$).

**3.** Method according to claim 1 or 2, **characterised in that** said step (a) consists of subjecting the surface of the object to an oxidising treatment.

**4.** Method according to any one of claims 1 to 3, **characterised in that** said polydopamine derivative is obtained by polymerising a dopamine derivative which complies with the following formula (II):

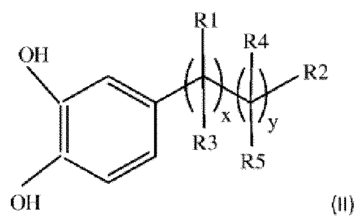

(II)

- the R1, R2, R3, R4 and R5 groups are independently selected from the group consisting of a hydrogen, a hydroxyl, a halogen, a thiol, an aldehyde, a carboxylic acid, a carboxylic ester, a carboxamide, a primary amine, a secondary amine, a nitrile, an imidazole, an azide or a polyhexamethylene dithiocarbamate;
provided that at least one group from the R1, R2, R3, R4 and R5 groups is not a hydrogen;
- x is equal to 0 or represents an integer between 1 and 10, including the bounds 1 and 10; and
- y is equal to 0 or represents an integer between 1 and 10, including the bounds 1 and 10;

provided that x or y is at least equal to 1.

5. Method according to any one of claims 1 to 4, **characterised in that** said step (b) comprises at least one operation, referred to as an oxidative autopolymerisation operation, consisting of contacting, under oxidising conditions, the surface provided in step (a) with a solution containing a dopamine, one of the derivatives thereof or one of the salts thereof, whereby a coating based on polymers of polydopamine or of one of its derivatives is deposited on said surface.

6. Method according to claim 5, **characterised in that** the oxidising conditions in said step (b) consist of using an alkaline solution containing a dopamine, one of the derivatives thereof or one of the salts thereof.

7. Method according to claim 5 or 6, **characterised in that** said oxidative autopolymerisation operation is followed by an operation in which a molecule carrying at least one or more -Y functions is grafted, covalently, onto the polymer of polydopamine or of polydopamine derivative by post-functionalisation.

8. Method according to claim 5 or 6, **characterised in that** said oxidative autopolymerisation operation is followed by an operation in which the coated surface obtained following the oxidative autopolymerisation operation is contacted with a solution containing at least one aryl diazonium salt and optionally at least one radically polymerisable monomer different from an aryl diazonium salt and subjecting said solution to non-electrochemical conditions, provided that

   when said solution does not contain a radically polymerisable monomer, said aryl diazonium salt has at least one -Y function,
   when said solution contains at least one aryl diazonium salt and at least one radically polymerisable monomer, said aryl diazonium salt and/or said radically polymerisable monomer has at least one -Y function,
   whereby radical entities are formed from said aryl diazonium salt and a coating based on polymers, identical or different, having at least one -Y function is grafted, covalently, onto said coated surface obtained following said oxidative autopolymerisation operation.

9. Method according to claim 8, **characterised in that** said non-electrochemical conditions are an organic reducing agent.

10. Method according to any one of claims 1 to 9, **characterised in that** said diamine is of formula (VI):

(R13)(R14)N-A-N(R15)(R16) (VI)

wherein

- R13, R14, R15 and R16, being identical or different, represent an optionally substituted alkyl group or an optionally substituted aryl group; and
- A is a chain selected from the group consisting of an optionally substituted alkylene chain, an optionally substituted alkenylene or alkynylene chain, an optionally substituted arylene chain, an optionally substituted alkylarylene chain, and an optionally substituted arylalkylene chain.

11. Method according to claim 10, **characterised in that** said R13, R14, R15 and R16 radicals are identical and represent a methyl or an ethyl.

12. Method according to any one of claims 1 to 11, **characterised in that** said dihalogen is of formula (VII):

(R17)-B-(R18) (VII)

wherein

- R17 and R18, being identical or different, represent a halogen; and
- B is a chain selected from the group consisting of an optionally substituted alkylene chain, an optionally substituted alkenylene or alkynylene chain, an optionally substituted arylene chain, an optionally substituted alkylarylene chain, and an optionally substituted arylalkylene chain.

13. Method according to claim 12, **characterised in that** the R17 and R18 radicals represent a bromine atom.

14. Method according to any one of claims 1 to 13, **characterised in that** at least one washing step followed by a rinsing step exists between step (a) and step (b), between the various operations during step (b) and/or between step (b) and step (c).

15. Object having a surface to which bacteriostatic or bactericidal properties have been imparted according to a method, as defined in any one of claims 1 to 14.

16. Object according to claim 15, **characterised in that** said object is selected from the group consisting of a film such as for example a packaging film, a box, a tray, a case, a lid, a sachet, dialysis equipment, a rod, a probe, paper, a textile, a membrane and a filter.

17. Use of an object according to claim 15 or 16,

for packaging and/or preserving food products such as fresh food products, or
for purifying and/or decontaminating a solution, an object or a surface in the environmental or medical/hospital field.

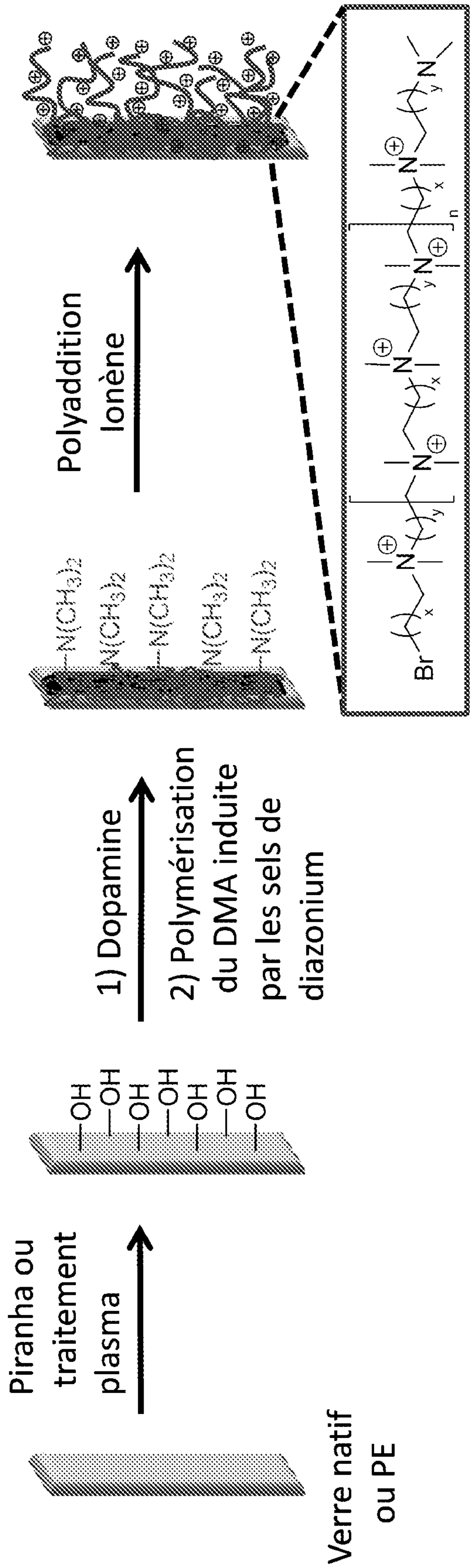
Verre natif
ou PE
Piranha ou
traitement
plasma
1) Dopamine
2) Polymérisation
du DMA induite
par les sels de
diazonium
Polyaddition
Ionène

FIG.1

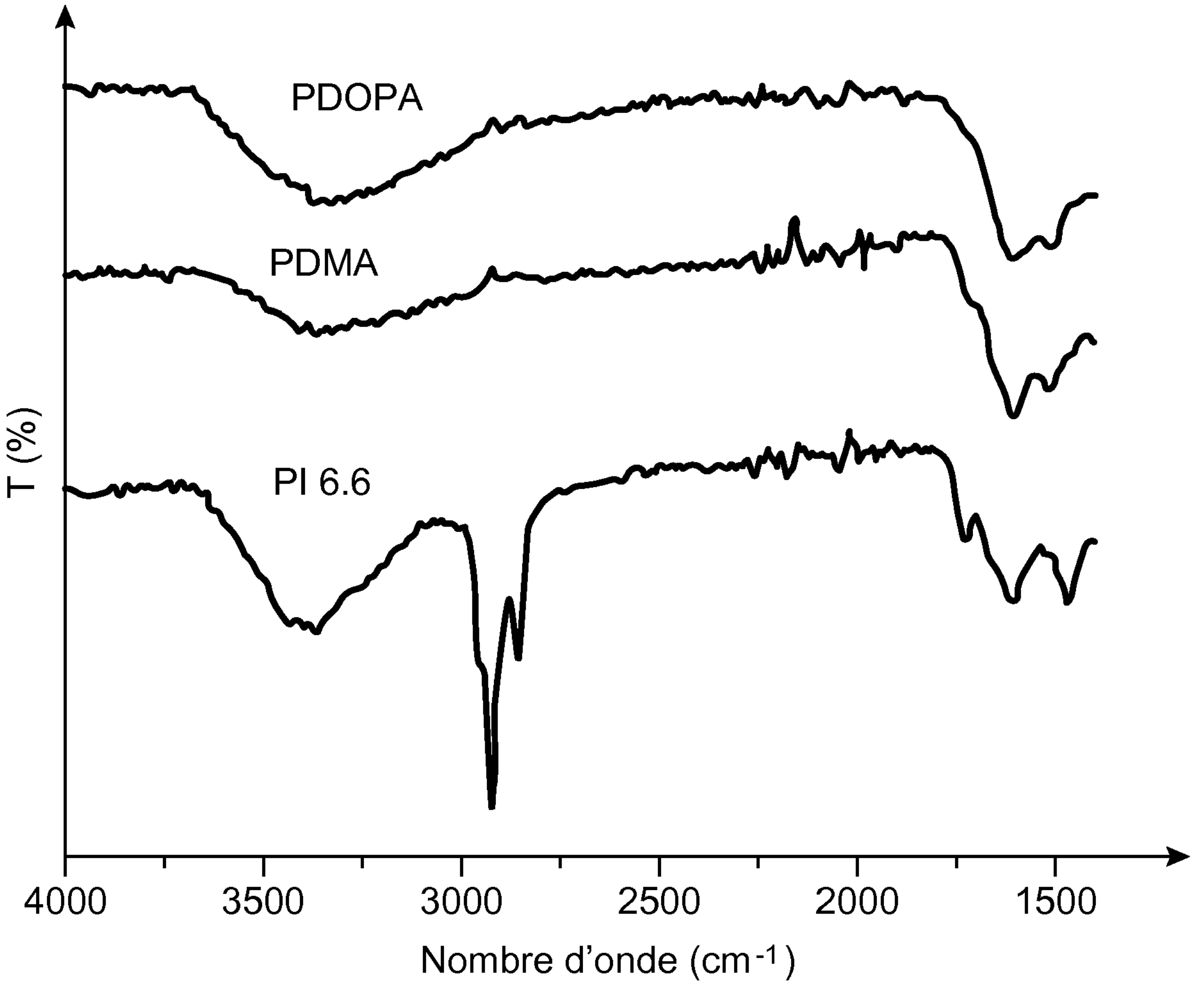
PDOPA
PDMA
PI 6.6
T (%)
4000
3500
3000
2500
2000
1500
Nombre d'onde (cm-1)

FIG.2

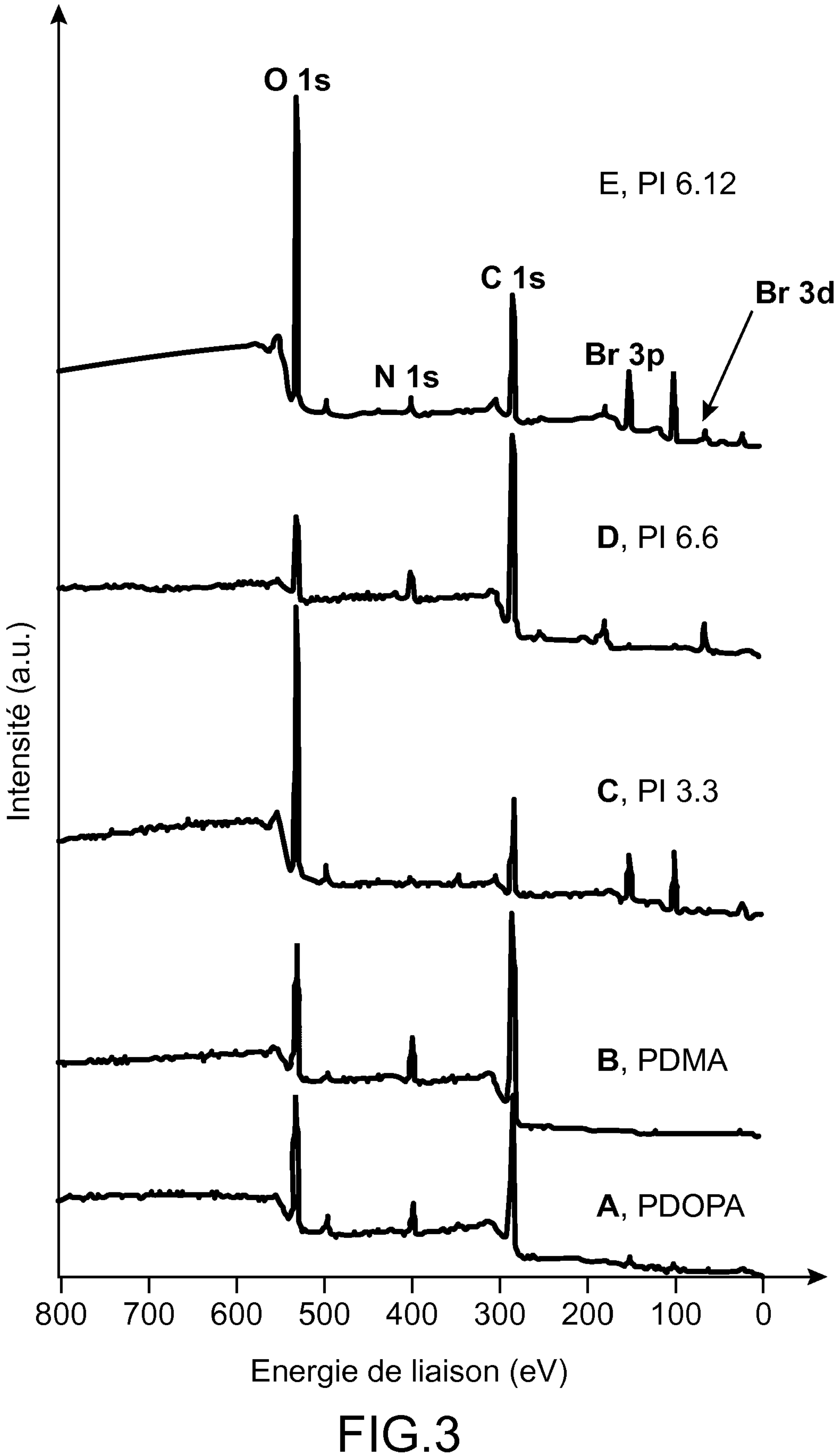
O 1s
E, PI 6.12
C 1s
Br 3d
Br 3p
N 1s
D, PI 6.6
Intensité (a.u.)
C, PI 3.3
B, PDMA
A, PDOPA
800
700
600
500
400
300
200
100
0
Energie de liaison (eV)

FIG.3

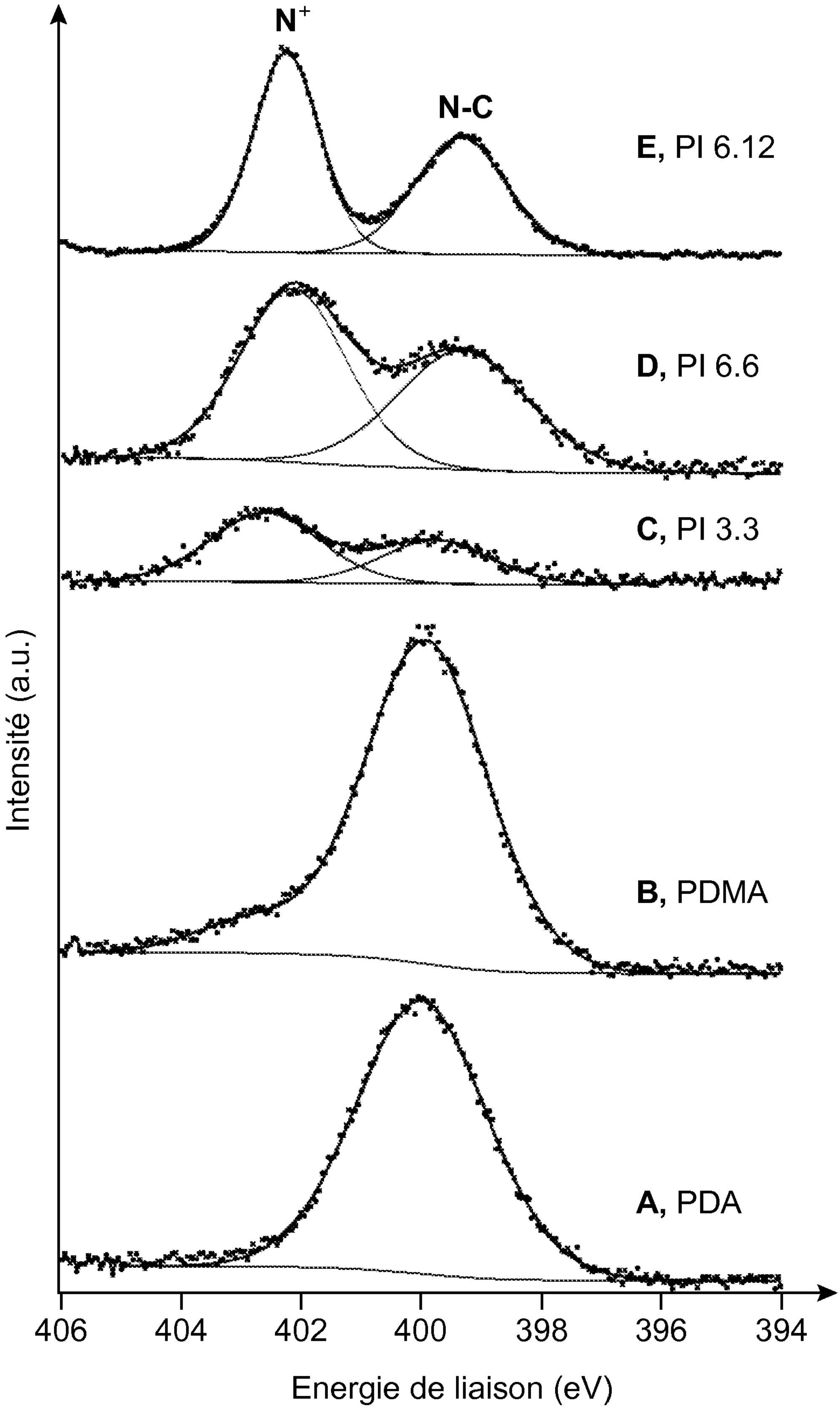
N+
N-C
E, PI 6.12
D, PI 6.6
C, PI 3.3
B, PDMA
A, PDA
Intensité (a.u.)
406
404
402
400
398
396
394
Energie de liaison (eV)

FIG.4

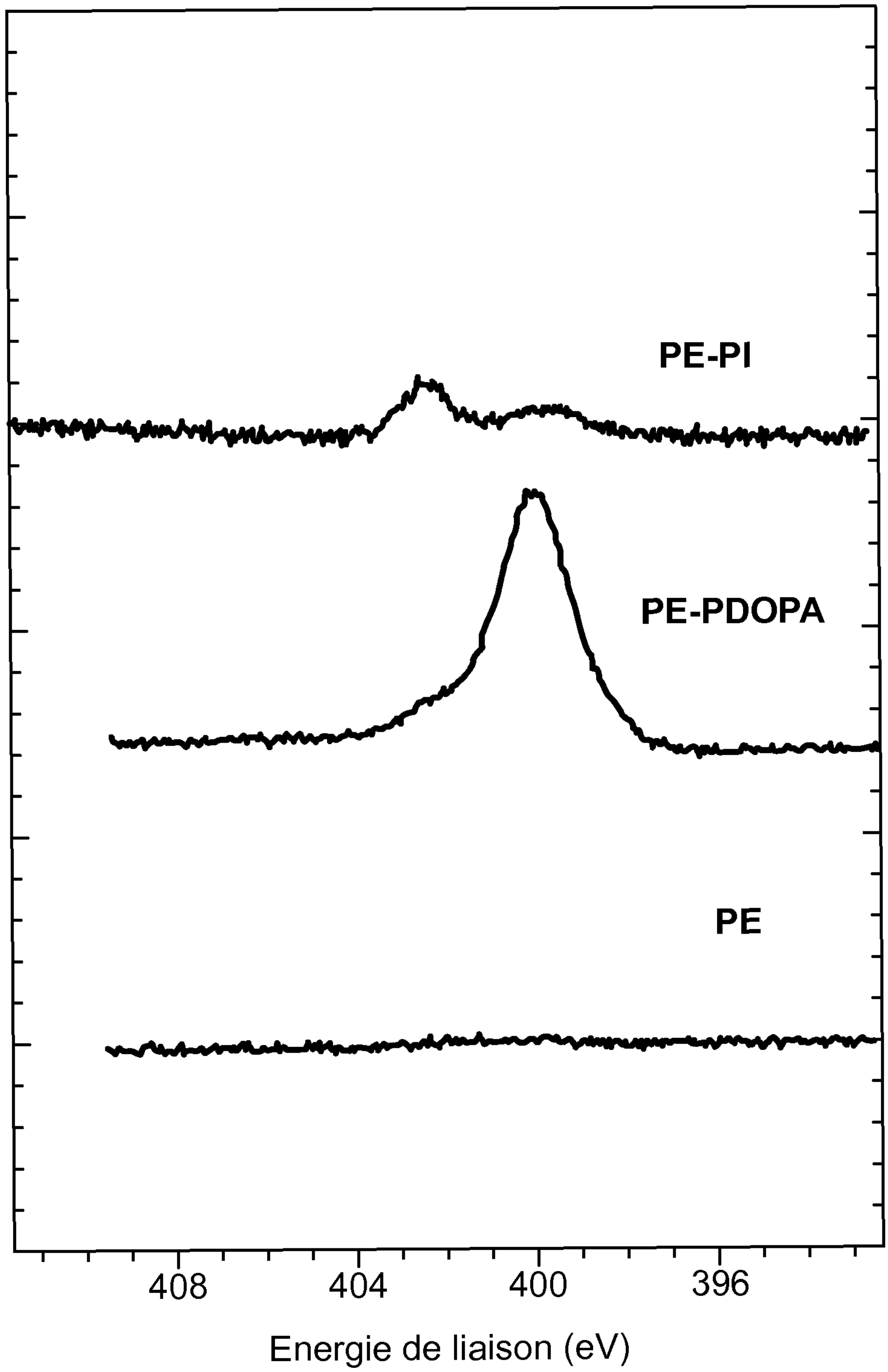


FIG.5

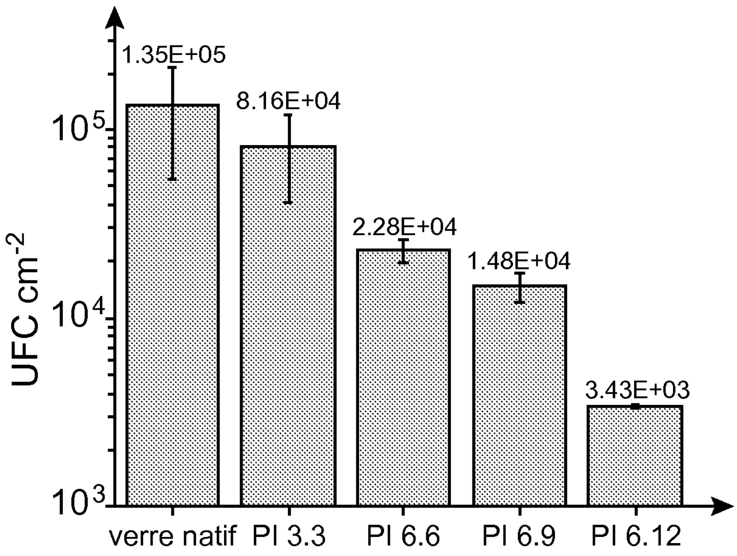


FIG.6a

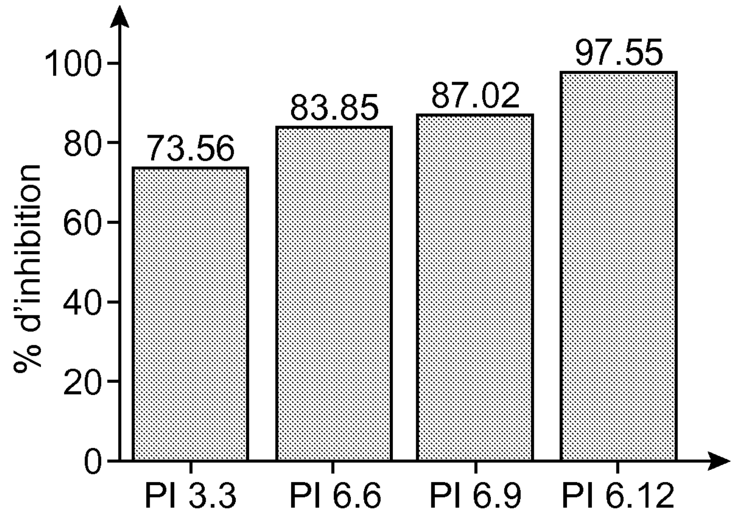


FIG.6b

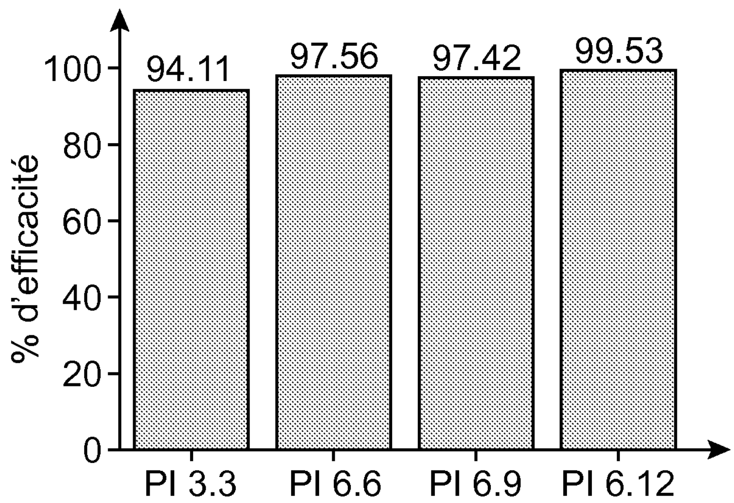


FIG.7

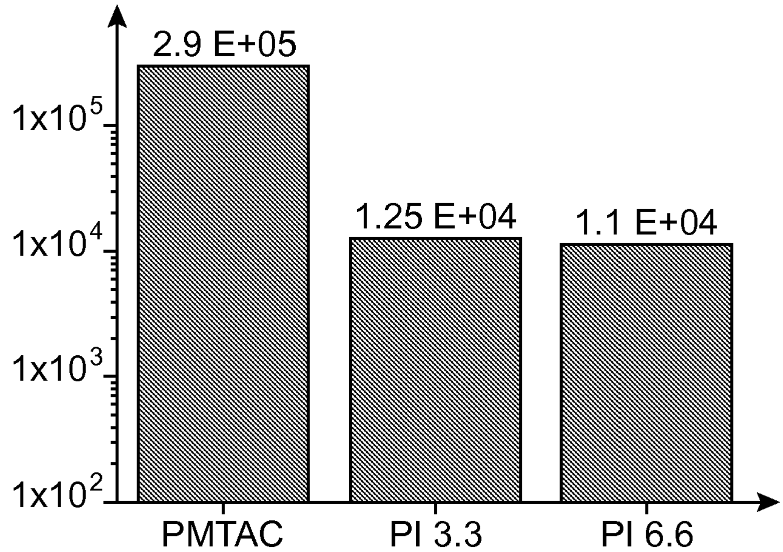
2.9 E+05
1.25 E+04
1.1 E+04
1x10^5
1x10^4
1x10^3
1x10^2
PMTAC
PI 3.3
PI 6.6

FIG.9

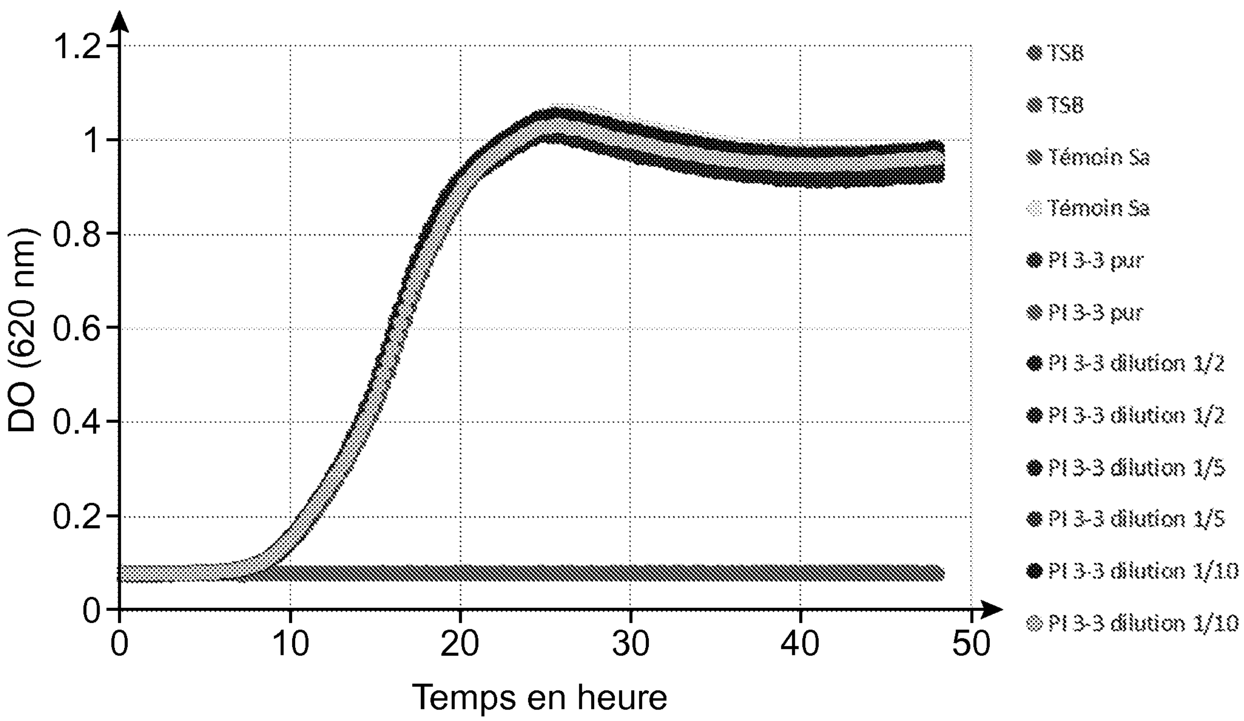
1.2
1
0.8
0.6
0.4
0.2
0
0
10
20
30
40
50
DO (620 nm)
Temps en heure
TSB
TSB
Témoin Sa
Témoin Sa
PI 3-3 pur
PI 3-3 pur
PI 3-3 dilution 1/2
PI 3-3 dilution 1/2
PI 3-3 dilution 1/5
PI 3-3 dilution 1/5
PI 3-3 dilution 1/10
PI 3-3 dilution 1/10

FIG.8

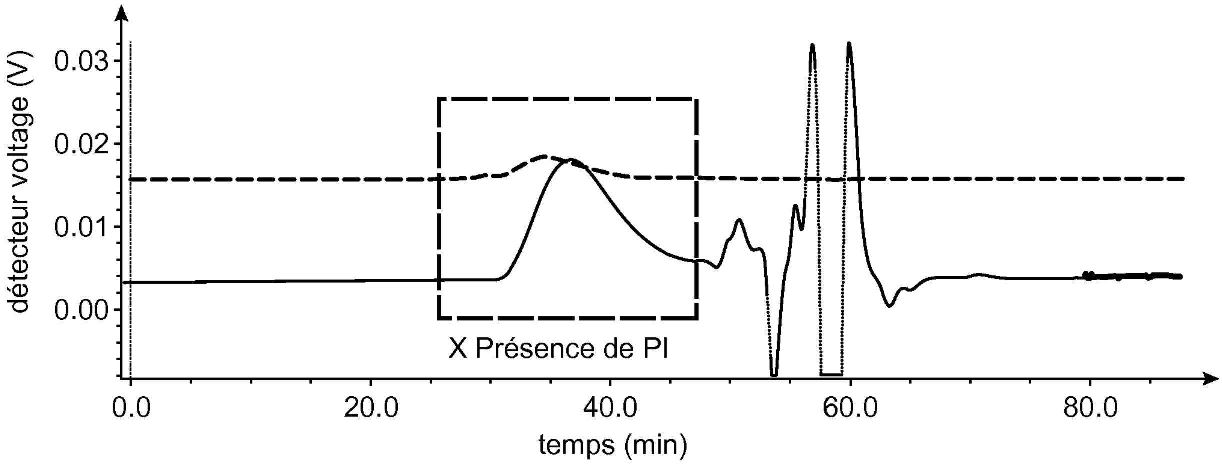


FIG.10a

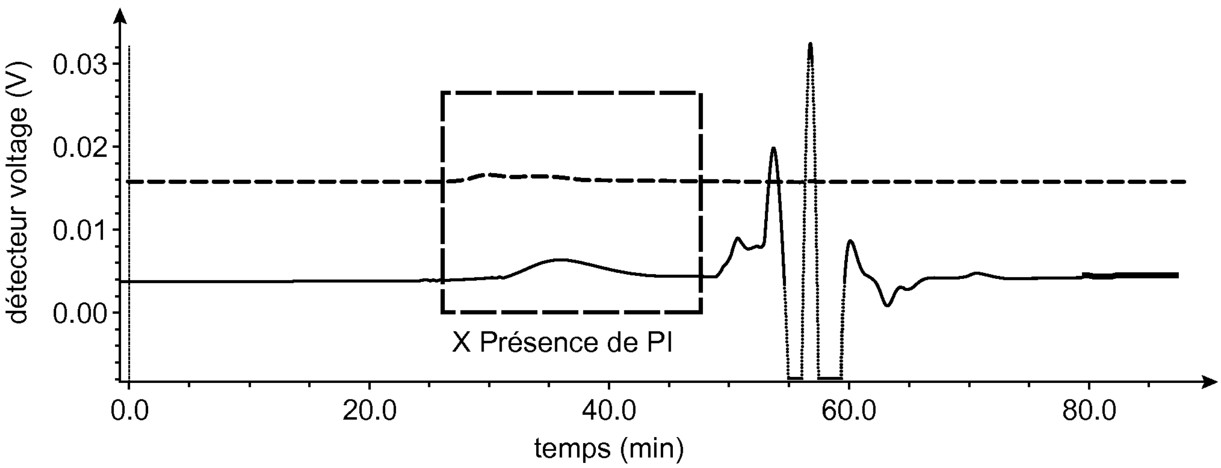


FIG.10b

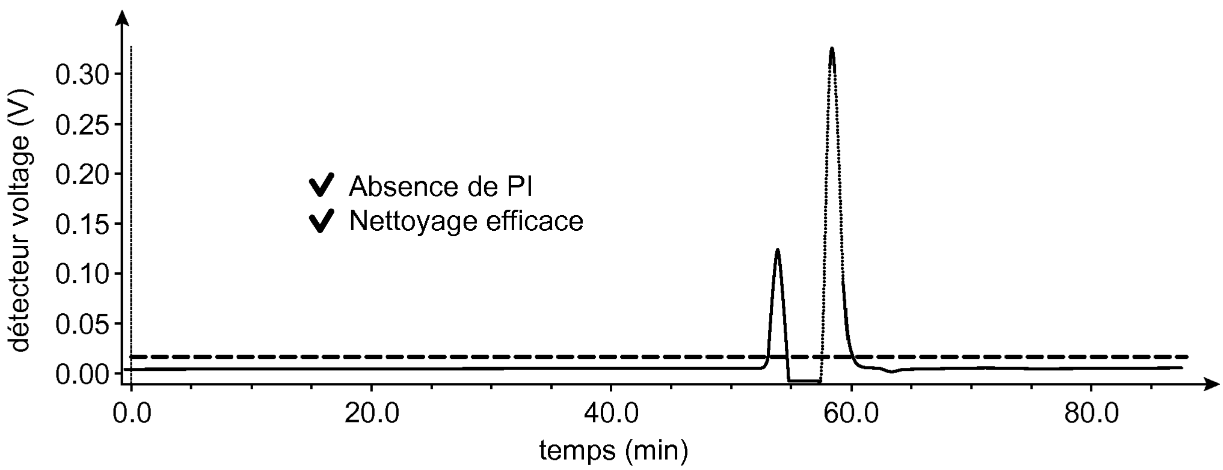


FIG.10c

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4980067 A
- WO 2008049108 A
- WO 2008078052 A
- WO 2005033378 A
- WO 2006097611 A
- WO 2012160120 A


### Littérature non-brevet citée dans la description


- **SHALEV et al.** *Journal of Materials Chemistry,* 2012, vol. 22, 2026-2032
- **DHENDE et al.** *ACS Appl. Mater. Interfaces,* 2011, vol. 3, 2830
- **LI et al.** *RSCAdv,* 2012, vol. 2, 4031
- **KURT et al.** *Langmuir,* 2007, vol. 23, 4719
- **MATTHEIS et al.** *Macromol. Biosci.,* 2012, vol. 12, 341
- **LOU et al.** *Acta Biomaterialia,* 2018, vol. 78, 78-88
- **STRASSBURG et al.** *Macromol. Biosci.,* 2015, vol. 15, 1710
- **LIU et al.** *Biomaterials,* 2017, vol. 127, 36
- **LIEBSCHER et al.** *Langmuir,* 2013, vol. 29, 10539-10548
- **MESSERSMITH.** *Science,* 2010, vol. 328, 180
- **GUARDINGO et al.** *Small,* 2014, vol. 10, 1594-1602
- **KOHRI ET KAWAMURA.** Polymer science : research advances, pratical applications and educational aspects. 2016, 159
- **RYU et al.** *ACS Appl. Mater. Interfaces,* 2018, vol. 10, 7523-7540
- **VAN OSS et al.** *Chem. Rev.,* 1988, vol. 88, 927
- **MALIKOVA et al.** *Physical Chemistry Chemical Physics,* 2012, vol. 14, 12898
- **ENGLER et al.** *Biomacromolecules,* 2013, vol. 14, 4331
- **MURATA et al.** *Biomaterials,* 2007, vol. 28, 4870
- **LEE et al.** *Biomacromolecules,* 2004, vol. 5, 877
- **DREYER et al.** *Langmuir,* 2012, vol. 28, 6428
- **NEOH ; KANG.** *ACS Appl. Mater. Interfaces,* 2011, vol. 3, 2808